(19) Europäisches Patentamt
European Patent Office
Office européen des brevets

(11) **EP 2 833 273 A1**

(12) **EUROPEAN PATENT APPLICATION**
published in accordance with Art. 153(4) EPC

(43) Date of publication:
**04.02.2015 Bulletin 2015/06**

(51) Int Cl.:
***G06F 17/30*** *(2006.01)*

(21) Application number: **13768182.1**

(86) International application number:
**PCT/JP2013/057021**

(22) Date of filing: **13.03.2013**

(87) International publication number:
**WO 2013/146270 (03.10.2013 Gazette 2013/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **30.03.2012 JP 2012081301**

(71) Applicant: **Rakuten, Inc.**
**Tokyo 140-0002 (JP)**

(72) Inventor: **YAMAHARA Hisanori**
**Tokyo 140-0002 (JP)**

(74) Representative: **Hoffmann Eitle**
**Patent- und Rechtsanwälte PartmbB**
**Arabellastraße 30**
**81925 München (DE)**

(54) **TERMINAL DEVICE, WEB SERVER, PROGRAM, RECORDING MEDIUM, AND METHOD**

(57)     A terminal device (100) comprises a selected object designating part (122) for determining an object conjectured to be selected by a user from among objects in a second Web page linked to a first Web page by a selected link. Furthermore, the terminal device (100) comprises a display position determining part (123) for determining the display position of the second Web page in a window so that the designated object is displayed within a prescribed range with an operation position as the reference.

FIG.4

EP 2 833 273 A1

**Description**

Technical Field

The present invention relates to a terminal device, Web server, program, recording medium and method.

Background Art

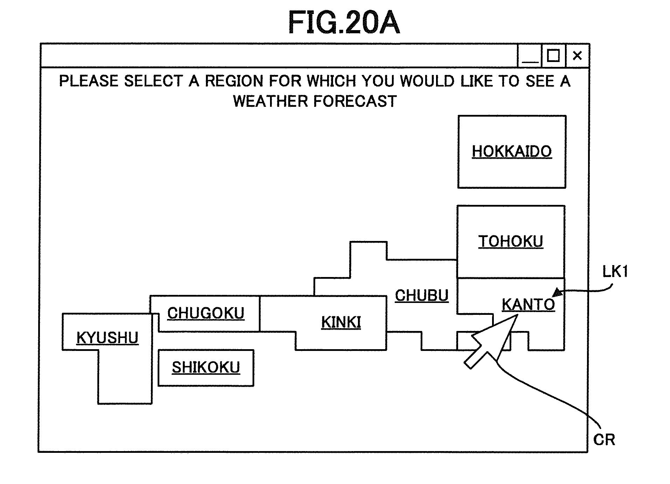

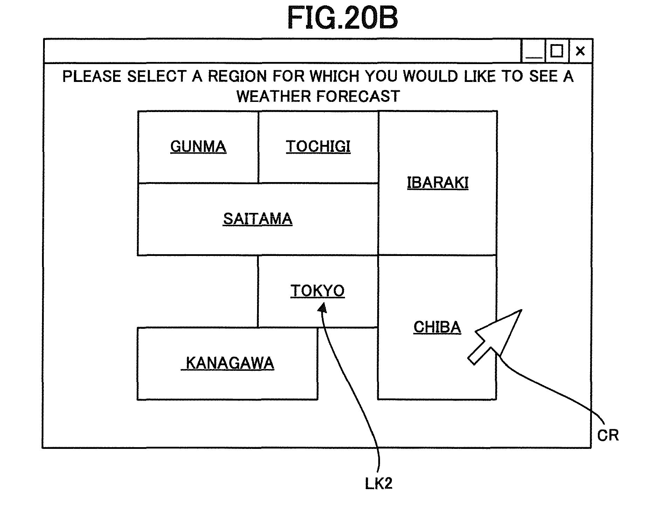

A device for displaying a Web page such as the one shown in FIG. 20A, and displaying another Web page such as the one shown in FIG. 20B linked to a link LK1 in the first Web page when that link LK1 is selected has been known from before (for example, see Patent Literature 1).

Citation List

Patent Literature

Patent Literature 1: Unexamined Japanese Patent Application Kokai Publication No. 2011-108102.

Summary of Invention

Technical Problem

In many cases, a user typically pays attention to the position where the link LK1 is displayed or around the display position of a cursor CR combined with the link LK1. Consequently, with the art of Patent Literature 1, when the object the user selects from among multiple objects in the Web page in FIG. 20B is a link LK2, it is necessary for the user to move their line of sight to the link LK2 from around the cursor CR, or to accomplish an operation of causing the cursor CR to move to the link LK2. Consequently, with the art of Patent Literature 1, the problem existed that there was a large burden on the user viewing the Web page.

In consideration of the foregoing, it is an objective of the present invention to provide a terminal device, a program, a computer-readable recording medium on which the program is recorded and a method for displaying a Web page that is viewable with less of a burden than in the past, and to provide a Web server, a program, a computer-readable recording medium on which the program is recorded and a method for transmitted a Web page that is viewable with less of a burden than in the past.

Solution to Problem

In order to achieve the above objective, the terminal device according to a first aspect of the present invention comprises:

an input part for inputting an operation position at which a selection operation is accomplished for selecting a link of a first Web page, and/or a cursor display position after a prescribed time has elapsed from when the selection operation was accomplished;
a designating part for designating an object conjectured to be selected by the user from among one or multiple objects in a second Web page linked to the first Web page by the selected link;
a determining part for determining a display position for a window displaying the second Web page or a display position for the second Web page in the window so that the designated object is displayed within a prescribed range with the operation position or the cursor display position as the reference; and
a displaying part for displaying the window displaying the second Web page at the determined display position or displaying the second Web page at the determined display position for the window.

In addition, in the terminal device according to the first aspect, it would be fine for the terminal device to further comprise:

an information storing part for storing, in multiple and associated with each other, the second Web page, an object in the second Web page, and a selection frequency with which that object has been selected or the change in the selection frequency;
wherein the designating part designates an object conjectured to be selected by the user on the basis of the selection frequency or the change in the selection frequency associated with the second Web page.

In addition, in the terminal device according to the first aspect, it would be fine if:

the information storing part further stores identification information identifying the user, associating this information with the second Web page, the object in the second Web page and the selection frequency with which that object has been selected or the change in the selection frequency;
the input part further inputs identification information identifying the user; and
the designating part designates the object conjectured to be selected by the user on the basis of the identification information identifying the user, and the selection frequency or the change in the selection frequency associated with the second Web page.

In addition, in the terminal device according to the first aspect, it would be fine if:

the information storing part further stores an attribute of the user, associating this attribute to the identification information identifying the user; and
the designating part designates the object conjectured to be selected by the user on the basis of the attribute of the user associated with the identification information identifying the user.

In addition, in the terminal device according to the first aspect, it would be fine if:

the input part inputs both the operation position and the cursor display position; and
the determining part:

determines the display position of the window or the display position of the second Web page so that the designated object is displayed within a prescribed range with the cursor display position as the reference, when the movement distance from the operation position to the cursor display position is shorter than a prescribed distance; and
determines the display position of the window or the display position of the second Web page so that the designated object is displayed within a prescribed range with the operation position as the reference, when the movement distance is longer than a prescribed distance.

In order to achieve the above objective, the display control program according to a second aspect of the present invention causes a computer to function as:

an input part for inputting an operation position at which a selection operation is accomplished for selecting a link of a first Web page, and/or a cursor display position after a prescribed time has elapsed from when the selection operation was accomplished;
a designating part for designating an object conjectured to be selected by the user from among one or multiple objects in a second Web page linked to the first Web page by the selected link;
a determining part for determining a display position for a window displaying the second Web page or a display position for the second Web page in the window so that the designated object is displayed within a prescribed range with the operation position or the cursor display position as the reference; and
a display controlling part for controlling a displaying part so as to display the window displaying the second Web page at the determined display position or display the second Web page at the determined display position for the window.

In order to achieve the above objective, the display control program recorded on the computer-readable recording medium according to a third aspect of the present invention causes a computer to function as:

an input part for inputting an operation position at which a selection operation is accomplished for selecting a link of a first Web page, and/or a cursor display position after a prescribed time has elapsed from when the selection operation was accomplished;
a designating part for designating an object conjectured to be selected by the user from among one or multiple objects in a second Web page linked to the first Web page by the selected link;
a determining part for determining a display position for a window displaying the second Web page or a display position for the second Web page in the window so that the designated object is displayed within a prescribed range with the operation position or the cursor display position as the reference; and
a display controlling part for controlling a displaying part so as to display the window displaying the second Web page at the determined display position or display the second Web page at the determined display position for the window.

In order to achieve the above objective, the display method according to a fourth aspect of the present invention comprises an input part, a designating part, a determining part and a displaying part, this display method including:

an input step in which the input part inputs an operation position at which a selection operation is accomplished for selecting a link of a first Web page, and/or a cursor display position after a prescribed time has elapsed from when the selection operation was accomplished;
a designation step in which the designating part designates an object conjectured to be selected by the user from among one or multiple objects in a second Web page linked to the first Web page by the selected link;
a determination step in which the determining part determines a display position for a window displaying the second Web page or a display position for the second Web page in the window so that the designated object is displayed within a prescribed range with the operation position or the cursor display position as the reference; and
a display step in which the displaying part displays the window displaying the second Web page at the determined display position or displays the second Web page at the determined display position for the window.

In order to achieve the above objective, the Web server according to a fifth aspect of the present invention comprises:

an input part for inputting an operation position at which a selection operation is accomplished for selecting a link of a first Web page, and a request requesting transmission of a second Web page linked to the first Web page by the link;
a designating part for designating an object conjectured to be selected by the user from among one or multiple objects in the second Web page;
a determining part for determining the display position of a window displaying the second Web page or the display position of the second Web page in the window, so that the determined object is displayed at the operation position or a cursor display position; and
a transmitting part for transmitting either the second Web page and the determined display position or the second Web page modified so as to be displayed at the determined display position.

In order to achieve the above objective, the transmission control program according to a sixth aspect of the present invention causes a computer to function as:

an input part for inputting an operation position at which a selection operation is accomplished for selecting a link of a first Web page, and a request requesting transmission of a second Web page linked to the first Web page by the link;
a designating part for designating an object conjectured to be selected by the user from among one or multiple objects in the second Web page;
a determining part for determining the display position of a window displaying the second Web page or the display position of the second Web page in the window, so that the determined object is displayed at the operation position or a cursor display position; and
a transmission controlling part for controlling a transmitting part so that either the second Web page and the determined display position or the second Web page modified so as to be displayed at the determined display position is transmitted.

In order to achieve the above objective, the transmission control program recorded on the computer-readable recording medium according to a seventh aspect of the present invention causes a computer to function as:

an input part for inputting an operation position at which a selection operation is accomplished for selecting a link of a first Web page, and a request requesting transmission of a second Web page linked to the first Web page by the link;
a designating part for designating an object conjectured to be selected by the user from among one or multiple objects in the second Web page;
a determining part for determining the display position of a window displaying the second Web page or the display position of the second Web page in the window, so that the determined object is displayed at the operation position or a cursor display position; and
a transmission controlling part for controlling a transmitting part so that either the second Web page and the determined display position or the second Web page modified so as to be displayed at the determined display position is transmitted.

In order to achieve the above objective, the transmission method according to an eighth aspect of the present invention comprises an input part, a determining part, a designating part and a transmitting part, this method including:

an input step in which the input part inputs an operation position at which a selection operation is accomplished for selecting a link of a first Web page, and a request requesting transmission of a second Web page linked to the first Web page by the link;

a designation step in which the designating part designates an object conjectured to be selected by the user from among one or multiple objects in the second Web page;

a determination step in which the determining part determines the display position of a window displaying the second Web page or the display position of the second Web page in the window, so that the determined object is displayed at the operation position or a cursor display position; and

a transmission step in which the transmitting part transmits either the second Web page and the determined display position or the second Web page modified so as to be displayed at the determined display position.

Advantageous Effects of Invention

With the terminal device, program, recording medium and method according to the present invention, it is possible to display Web pages that are viewable with less of a burden than in the past. In addition, with the Web server, program, recording medium and method according to the present invention, it is possible to transmit Web pages that are viewable with less of a burden than in the past.

Brief Description of Drawings

FIG. 1 is a system composition diagram showing one composition example of a communication system;

FIG. 2 is a hardware composition diagram showing one example of a terminal device according to the present invention;

FIG. 3 is a flowchart showing one example of a display control process executed by the terminal device according to any of Claims 1, 3, 5 and 14;

FIG. 4 is a function block diagram showing one example of functions possessed by the terminal device according to any of Claims 1, 13 and 14;

FIG. 5A is a drawing showing a first example of a Web page displayed by the terminal device according to any of Claims 1 through 13;

FIG. 5B is a drawing showing a second example of a Web page displayed by the terminal device according to any of Claims 1 through 13;

FIG. 6 is a drawing showing a third example of a Web page displayed by the terminal device according to any of Claims 1 through 13;

FIG. 7 is a hardware composition diagram showing one example of a Web server according to the present invention;

FIG. 8A is a flowchart showing one example of a display control process executed by the terminal device according to any of Claims 2, 4, 6 and 15;

FIG. 8B is a flowchart showing one example of a display control process executed by the Web server according to any of Claims 2, 4, 6 and 15;

FIG. 9 is a function block diagram showing one example of functions possessed by the Web server according to any of Claims 2, 4, 6, 8, 10, 12 and 15;

FIG. 10 is a function block diagram showing one example of functions possessed by the terminal device according to any of Claims 3, 5, 7, 9 and 11;

FIG. 11 is a drawing showing one example of a selection frequency table stored by the terminal device according to Claim 3 or the Web server according to Claim 4;

FIG. 12 is a drawing showing one example of a rate-of-increase table stored by the terminal device according to Claim 5 or the Web server according to Claim 6;

FIG. 13 is a drawing showing one example of a selection frequency table stored by the terminal device according to Claim 7 or the Web server according to Claim 8;

FIG. 14 is a flowchart showing one example of a display control process executed by a terminal device according to any of Claims 7, 9 and 11;

FIG. 15A is a flowchart showing one example of a display control process executed by a terminal device according to any of Claims 8, 10 and 12;

FIG. 15B is a flowchart showing one example of a transmission control process executed by a Web server according to any of Claims 8, 10 and 12;

FIG. 16 is a drawing showing one example of a rate-of- increase table stored by the terminal device according to Claim 9 or the Web server according to Claim 10;

FIG. 17 is a drawing showing one example of an attribute table stored by the terminal device according to Claim 11 or the Web server according to Claim 12;

FIG. 18 is a flowchart showing one example of a display control process executed by the terminal device according to Claim 13;

FIG. 19A is a drawing showing a first example of a Web page displayed by the terminal device according to either Claims 14 or 15;

FIG. 19B is a drawing showing a second example of a Web page displayed by the terminal device according to either Claims 14 or 15;

FIG. 20A is a drawing showing a first example of a Web page displayed by a conventional terminal device; and

FIG. 20B is a drawing showing a second example of a Web page displayed by a conventional terminal device.

Description of Embodiments

Below, the preferred embodiments of the present invention are described with reference to the attached drawings.

<First preferred embodiment>

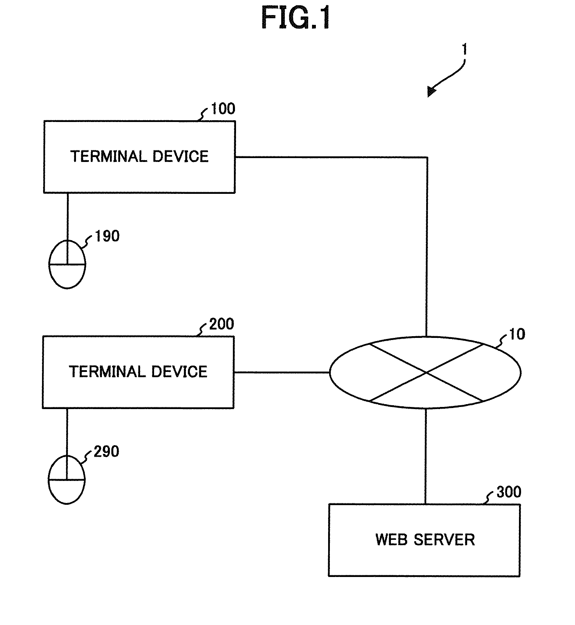

Terminal devices 100 and 200 according to a first preferred embodiment of the present invention constitute an information communication system 1 such as that shown in FIG. 1. Besides the terminal devices 100 and 200, the information communication system 1 comprises a computer communication network 10 (hereafter simply referred to as the communication network 10) and a Web server 300.

The communication network 10 comprises, for example, the Internet. It would also be fine for the communication network 10 to comprise a LAN (Local Area Network) or a public circuit network.

Connected to the terminal devices 100 and 200 are pointing devices (hereafter referred to as mice) 190 and 290, respectively. The terminal device 100 and the mouse 190, and the terminal device 200 and the mouse 290, have the same composition as each other and accomplish the same actions, so below the explanation will primarily be for the terminal device 100 and the mouse 190.

The mouse 190 is connected by USB (Universal Serial Bus) to the terminal device 100, and a signal indicating the amount of movement by which the position is moved by the user's operation and a signal in accordance with a click operation by the user are input into the terminal device 100.

The terminal device 100 transmits a request (hereafter referred to as a transmission request) seeking transmission of a Web page, to the Web server 300 in accordance with the signals and/or the like input from the mouse 190. Following this, the terminal device 100 receives the Web page with which the Web server 300 responds to the transmission request, and displays the received Web page.

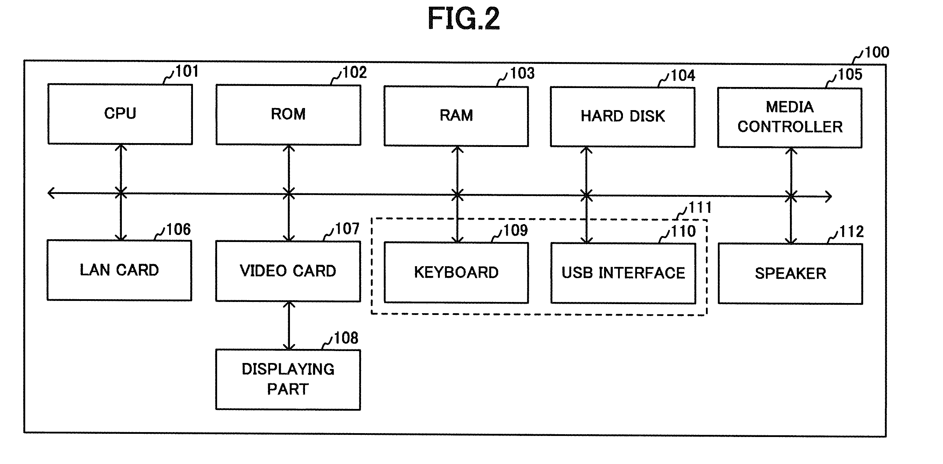

Next, the hardware composition of the terminal device 100 is explained with reference to FIG. 2.

The terminal device 100 comprises a personal computer. The terminal device 100 comprises a CPU (Central Processing Unit) 101, ROM (Read Only Memory) 102, RAM (Random Access Memory) 103, a hard disk 104, a media controller 105, a LAN (Local Area Network) card 106, a video card 107, a displaying part 108, an operator 111 and a speaker 112.

The CPU 101 controls the entirety of the terminal device 100 by executing programs in accordance with programs stored in the ROM 102 or the hard disk 104.

The RAM 103 is a work memory that temporarily stores data that is the subject of processing, during execution of programs by the CPU 101.

The hard disk 104 is an information storing part for storing tables preserving various types of data. It would be fine for the terminal device 100 to comprise flash memory instead of the hard disk 104.

The media controller 105 reads various types of data and programs from recording media including flash memory, CD (Compact Disc), DVD (Digital Versatile Disc) and Blu-ray Disc®.

The LAN card 106 transmits and receives data to and from the Web server 300 connected via the communication network 10.

The video card 107 renders images based on digital signals output from the CPU 101 and also outputs an image signal expressing the rendered image.

The displaying part 108 comprises an LCD (Liquid Crystal Display), for example, and displays a cursor indicating a Web page and objects in the Web page in accordance with the image signal output from the video card 107. It would be fine for the displaying part 108 to comprise a PDP (Plasma Display Panel) or EL (Electroluminescence) display instead of the LCD.

The operator 111 comprises a USB interface 110 connected by USB to a keyboard 109 and the mouse 190. The keyboard 109 inputs signals in accordance with the user's keyboard operation and the USB interface 110 inputs signals output from the mouse 190.

The speaker 112 outputs audio based on signals output from the CPU 101.

Next, the functions possessed by the terminal device 100 will be described.

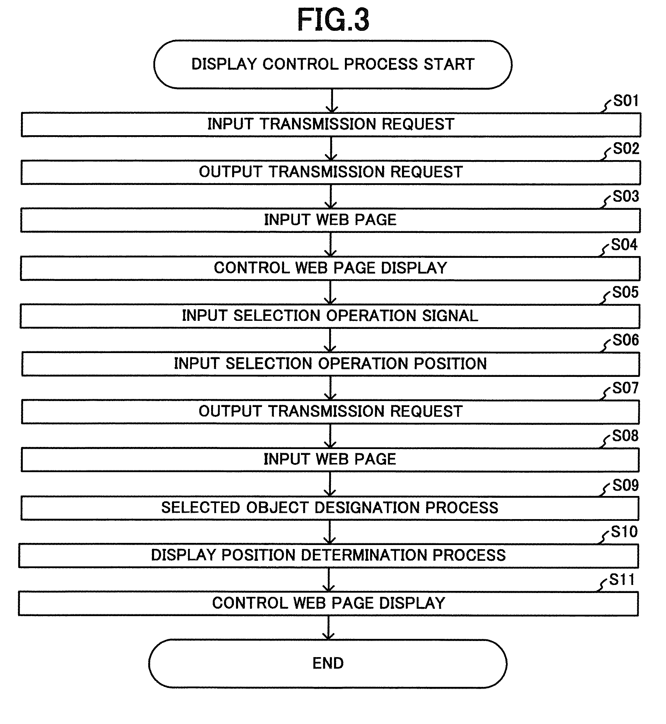

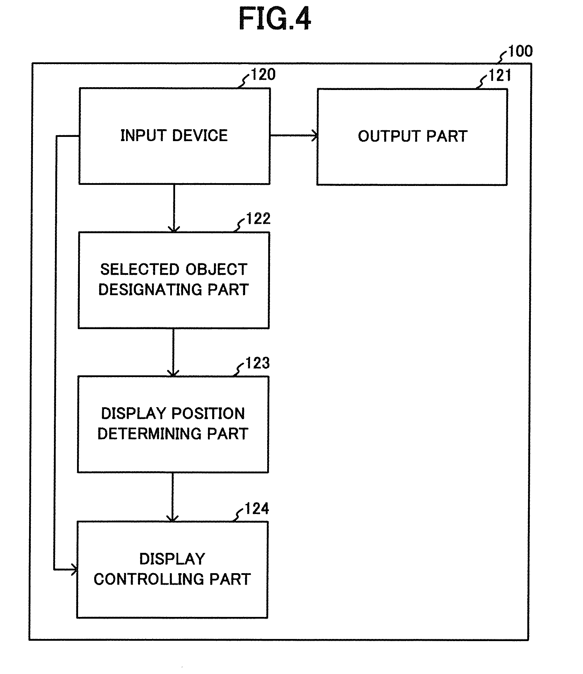

By executing the display control process shown in FIG. 3, the CPU 101 functions as an input part 120, an output part 121, a selected object designating part 122, a display position determining part 123 and a display controlling part 124, as shown in FIG 4.

The input part 120 inputs a transmission request requesting transmission of a Web page from the operator 111 shown in FIG. 2. In addition, the input part 120 inputs the Web page received by the LAN card 106, from the LAN card 106.

The output part 121 transmits the input transmission request to the Web server 300.

The selected object designating part 122 determines an object (hereafter called the selected object) conjectured to be selected by the user of the terminal device 100 from among the multiple objects in the received Web page.

The display position determining part 123 determines the display position of the Web page having the selected object such that the selected object is displayed within a prescribed range from the display position of the cursor in the displaying part 108 shown in FIG. 2.

The display controlling part 124 controls the displaying part 108 shown in FIG. 2 such that the Web page is displayed at the position determined.

Next, the display control process executed by the input part 120, the output part 121, the selected object designating part 122, the display position determining part 123 and the display controlling part 124 shown in FIG. 4 is described.

The input part 120 shown in FIG. 4 starts the display control process shown in FIG. 3 when an operation signal is input from the operator 111 shown in FIG. 2.

First, the input part 120 inputs a transmission request requesting transmission of a Web page, from the operator 111 (step S01).

Next, the output part 121 outputs the input transmission request to the LAN card 106 shown in FIG. 2 (step S02). Following this, the LAN card 106 transmits the transmission request to the Web server 300.

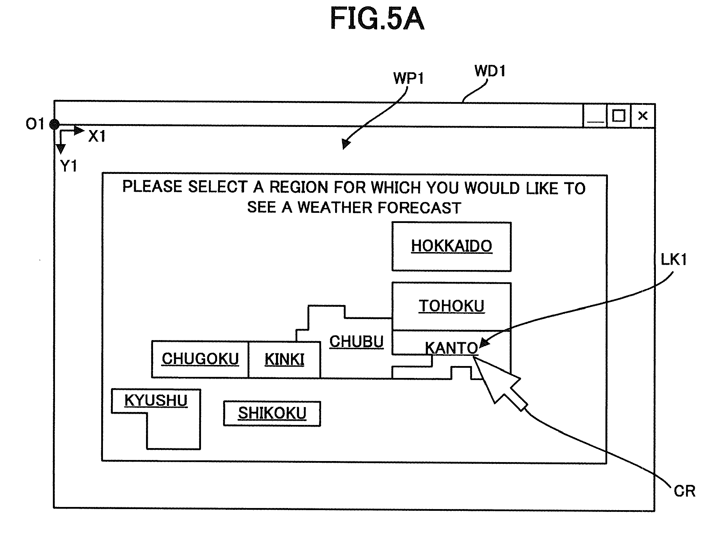

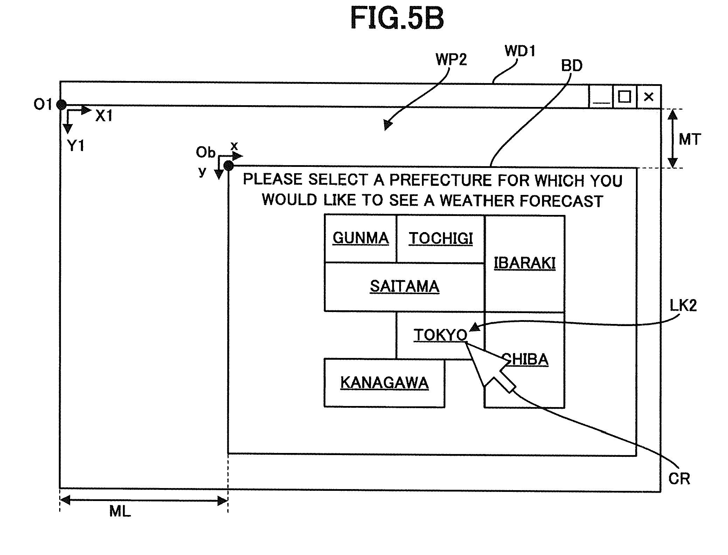

Following this, the Web server 300 returns a Web page in accordance with the transmission request. The LAN card 106 receives the Web page from the Web server 300. Here, the explanation will be made by citing as an example a case in which the Web page received is the Web page WP1 shown in FIG. 5.

Next, the input part 120 inputs the Web page received, from the LAN card 106 (step S03).

Following this, the display controlling part 124 controls the displaying part 108 shown in FIG. 2 so as to display the input Web page WP1 (step S04).

The explanation is such that following this, the user operates the operator 111 and causes the cursor CR to coincide with the link LK1 displayed in the Web page WP1 and then accomplishes an operation with the operator 111 for selecting the link LK1.

In this preferred embodiment, the explanation is such that the operation of selecting the link LK1 is an operation such as the user clicking or double-clocking the mouse 190 connected to the terminal device 100 shown in FIG. 2, but this is intended to be illustrative and not limiting. For example, when the terminal device 100 has a touch panel positioned overlaying the displaying part 108, it would be fine for the operation of selecting the link LK1 to be an operation of the user tapping or double-tapping the position on the touch panel corresponding to the position where the link LK1 is displayed on the displaying part 108.

Next, the input part 120 inputs the operation signal corresponding to the operation of selecting the link LK1 (hereafter called the selection operation signal) (step S05). Following this, the input part 120 inputs the display position of the cursor CR from the OS (Operating System) as the position where the selection operation was accomplished (hereafter called the selection operation position) (step S06).

The selection operation position is expressed by coordinate values $(X1s, Y1s)$ of an X1Y1 coordinate system with the main scanning direction being the +X1 direction, the auxiliary scanning direction being the +Y1 direction and the point in the upper leftmost corner facing a window WD1 in which the Web page WP1 is displayed as the origin O1.

Following this, the output part 121 outputs a transmission request requesting transmission of the Web page linked to the link LK1, to the LAN card 106 shown in FIG. 2 (step S07). Following this, the LAN card 106 transmits the transmission request to the Web server 300.

Following this, the Web server 300 returns the Web page corresponding to the transmission request. The LAN card 106 receives the Web page from the Web server 300. Here, the explanation will for the case where the received Web page is a Web page WP2.

Next, the input part 120 inputs the Web page WP2 received, from the LAN card 106 (step S08).

Following this, the selected object designating part 122 shown in FIG. 4 accomplishes a process (hereafter called the selected object designation process) of designating the object conjectured to be selected by the user, from among the multiple objects in the Web page WP2 (step S09).

Here, the multiple objects in the Web page WP2 for example include links, buttons, text strings and images, each of these having a tag. In this preferred embodiment, the selected object designating part 122 designates that LK2 having a predetermined tag is the object conjectured to be selected by the user (that is to say, the selected object) by analyzing the HTML (HyperText Markup Language) expressing the Web page WP2.

Following this, the display position determining part 123 executes a display position determination process determining the display position of the Web page WP2 in the window WD1 so that the selected object LK2 is displayed within a prescribed range with the selection operation position as the reference (step S10). The prescribed range with the selection operation position as the reference is for example a range within a prescribed distance from the selection operation position. It is possible for one skilled in the art to determine favorable values for the prescribed distance through experimentation.

In the display position determination process of this preferred process, the display position determining part 123 first determines the display position of the selected object LK2 in the body BD of the Web page WP2 by analyzing the HTML indicating the Web page WP2. The display position of the selected object link LK2 in the body BD is indicated by coordinate values (xl, yl) of an xy coordinate system with the main scanning direction in the +x direction, the auxiliary scanning direction in the +y direction and the point Ob in the upper leftmost corner facing the body BD as the reference.

Next, the display position determining part 123 determines the margin of the body BD necessary for causing the selected object LK2 to be displayed within a prescribed range with the selection operation position as the reference, using (1) and (2) below.

$$\text{Margin left ML} = X1s - xl \qquad (1)$$

$$\text{Margin top MT} = Y1s - yl \qquad (2)$$

Margin left ML is a value indicating the extent to which a point Ob on the top left of the body BD is caused to shift in the main scanning direction from a point O1 in the top left of the window WD 1. Margin top MT is a value indicating the extent to which a point Ob on the top left of the body BD is caused to shift in the auxiliary scanning direction from a point O1 in the top left of the window WD1.

In addition, X1s is the X1 coordinate of the selection operation position with the origin O1 as the reference, and xl is the x coordinate of the display position of the selected object LK2 with the origin Ob as the reference. Y1s is the Y1 coordinate of the selection operation position with the origin O1 as the reference, and yl is the y coordinate of the display position of the selected object LK2 with the origin Ob as the reference.

Following this, the display controlling part 124 shown in FIG. 4 controls the displaying part 108 shown in FIG. 2 so as to display the Web page WP2 at the display position determined by the display position determining part 123 (step S11). In this preferred embodiment, the display controlling part 124 causes the Web page WP2 to be displayed so that the point Ob of the body DB is positioned at a position shifted by the margin left ML in the main scanning direction from the origin O1 of the window WD1 and shifted by the margin top MT in the auxiliary scanning direction from the origin O1. This process is realized by altering the set value of the style sheet determining the margins of the body BD using Java ® script.

Following this, the display controlling part 124 concludes execution of the display control process.

With this composition, the terminal device 100 determines the display position of the Web page WP2 in the window WD1 and displays the Web page WP2 at the determined display position so that the selected object LK2 is displayed within a prescribed range with the selection operation position as the reference. The user normally selects the link LK1 and is thus focused on the link LK1, so when the Web page WP2 is displayed, in many cases attention is still focused around the position where the link LK1 shown in FIG. 5A is displayed. Consequently, the terminal device 100 displays the link LK2 the user is conjectured to select within a prescribed range of where the user is focused, so the user has little or absolutely no need to move the line of sight in order to select the link LK2. In addition, because the cursor CR is displayed within the prescribed range of where the user is focused, the user has little or absolutely no need to cause the cursor CR to shift in order to select the link LK2. Consequently, it is possible to cause a Web page the user desires to be displayed on the terminal device 100 by the user simply doing the operation of selecting the link LK2. Hence, it is possible for the terminal device 100 to display the Web page so as to be viewable with less of a burden than in the past.

<Variation 1 of first preferred embodiment>

In the first preferred embodiment, the terminal device 100 designates the link LK2 as the selected object which it is conjectured the user will select, but this is intended to be illustrative and not limiting. It would also be fine for the terminal device 100 to have as the selection object a button, text character string indicating a warning, or an image, in the Web page WP2, for example.

<Variation 2 of the first preferred embodiment>

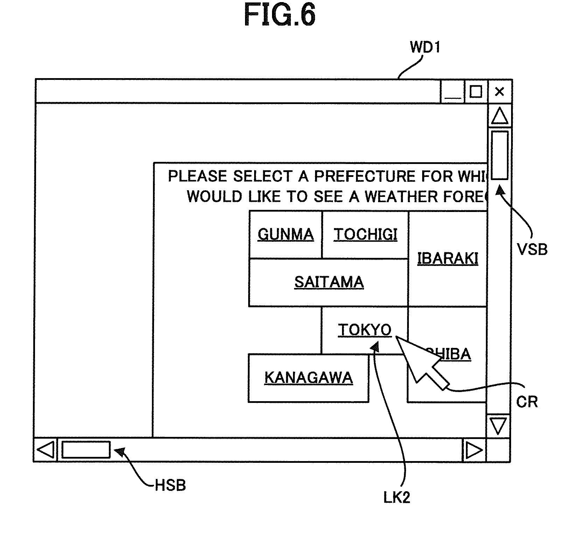

In the first preferred embodiment, the display position determining part 123 of the terminal device 100 was explained as determining the margin of the Web page WP2 so that the selected object LK2 is displayed within a prescribed range with the selection operation position as the reference. In contrast, in this variation the display position determining part 123 determines the scroll amount of the Web page WP2 in the horizontal direction (main scanning direction) and the scroll amount in the vertical direction (auxiliary scanning direction) so that the selected object LK2 is displayed within a prescribed range with the selection operation position as the reference.
The display controlling part 124 causes a scroll bar HSB in the horizontal direction and a scroll bar VSB in the vertical direction to be displayed in the window WD1, as shown in FIG. 6. The display controlling part 124 causes the window WP2 to be displayed in the window WD1 scrolled in the horizontal direction by the scroll amount in the horizontal direction determined by the display position determining part 123, and scrolled in the vertical direction by the scroll amount determined in the vertical direction.

<Variation 3 of the first preferred embodiment>

With the first preferred embodiment, the display position determining part 123 of the terminal device 100 was explained as determining the margins of the Web page WP2 so that the selected object LK2 is displayed within a prescribed range with the selection operation position as the reference. In addition, in variation 2 of the first preferred embodiment, the display position determining part 123 was explained as determining the scroll amount in the horizontal direction and the scroll amount in the vertical direction of the Web page WP2 so that the selected object LK2 is displayed within a prescribed range with the selection operation position as the reference.
With this variation, when it is not possible to display the entirety of the Web page WP2 in the window WD1 without scrolling, as shown in FIG. 6, the display position determining part 123 determines the scroll amount in the horizontal direction and the scroll amount in the vertical direction of the Web page WP2 so that the selected object LK2 is displayed within a prescribed range with the selection operation position as the reference.
When the display position determining part 123 determines the scroll amount, the display controlling part 124 causes the scroll bar HSB in the horizontal direction and the scroll bar VSB in the vertical direction to be displayed in the window WD1. In addition, the display controlling part causes the Web page WP2 to be displayed in the window WD1 scrolled in the horizontal direction by the scroll amount in the horizontal direction determined by the display position determining part and scrolled in the vertical direction by the scroll amount determined in the vertical direction.
In contrast, when it is possible to display the entirety of the Web page WP2 in the window WD1 without scrolling, the display position determining part 123 determines the margins of the Web page WP2 so that the selected object LK2 is displayed within a prescribed range with the selection operation position as the reference.
When the display position determining part 123 determines the margins, the display controlling part 124 causes the Web page WP2 to be displayed such that the point Ob of the body BD is positioned at a position shifted by the margin left ML in the main scanning direction from the origin O1 of the window WD1 and by the margin top MT in the auxiliary scanning direction from the origin O1.

<Second preferred embodiment>

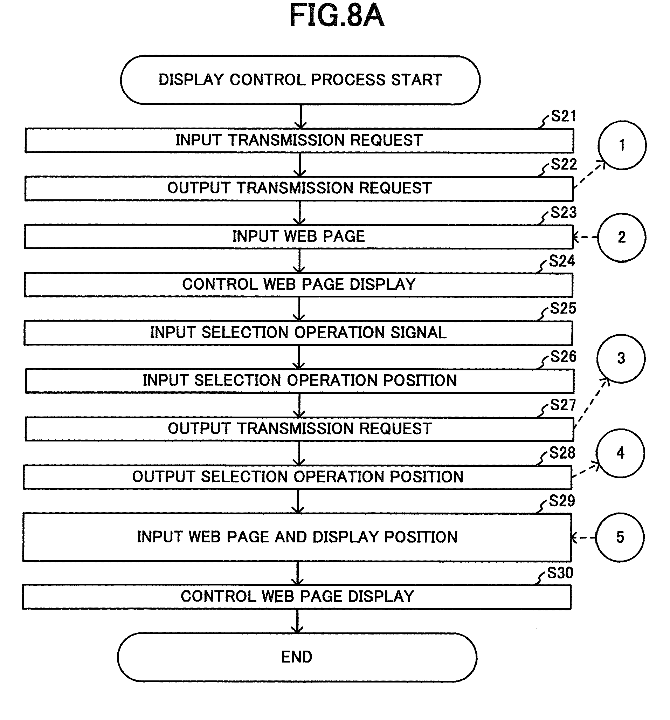

In the first preferred embodiment, the terminal device 100 was explained as determining the display position of a Web page having the selected object such that the selected object is displayed within a prescribed range with the selection operation position as the reference. In contrast, the in the second preferred embodiment, the Web server 300 determines the display position of the Web page having the selected object so that the selected object is displayed within a prescribed range with the selection operation position as the reference. Below, the points of difference from the first preferred embodiment are primarily described.
When operated by a user, the terminal device 100 starts execution of the display control process shown in FIG. 8A, not the display control process shown in FIG. 3.

When execution of the display control process starts, the terminal device 100 executes the same processes as in steps S01 through S07 in FIG. 3 (steps S21 through S27). Through this, the terminal device displays the Web page WP1 shown in FIG. 5A and the link LK1 in the displayed Web page Wp1 is selected. Following this, the terminal device 100 transmits to the Web server 300 a transmission request requesting transmission of the Web page WP2 linked to the link LK2.

Next, the terminal device 100 transmits to the Web server 300 data indicating the selection operation position input in step S25 (step S28).

Following this, the terminal device 100 receives from the Web server 300 the Web page WP2 transmission of which was requested, and data indicating the display position of the Web page WP2 so that the selected object in the Web page WP2 is displayed within a prescribed range with the selection operation position as the reference (step S29).

In this preferred embodiment, the data indicating the display position of the Web page WP2 is explained as a style sheet indicating the margin top MT and the margin left ML in the window WD 1 of the body BD of the Web page WP2. However, this is intended to be illustrative and not limiting, for it would be fine for the data indicating the display position of the Web page WP2 to be a style sheet indicating the scroll amount in the horizontal direction of the Web page WP2 and the scroll amount in the vertical direction.

Next, by executing the same process as in step S 11 of FIG. 4, the terminal device 100 controls the displaying part 108 shown in FIG. 2 so that the Web page WP2 is displayed at the display position indicated by the data received from the Web server (step S30), and then concludes operation of the display control process.

Next, the hardware composition of the Web server 300 for transmitting the Web page and/or the like to the terminal device 100 is explained.

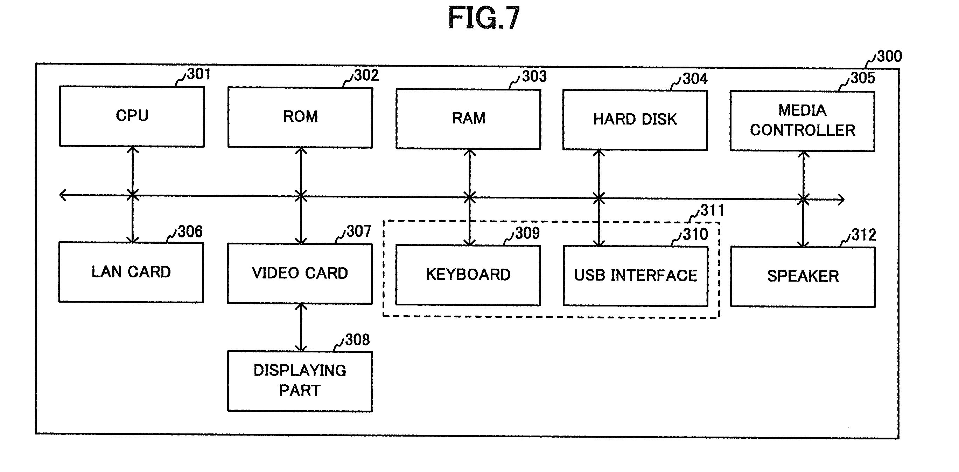

The Web server 300 comprises a server, and as shown in FIG. 7 comprises a CPU 301, a ROM 302, a RAM 303, a hard disk 304, a media controller 305, a LAN card 306, a video card 307, a displaying part 308, an operator 311 and a speaker 312. The hardware composition of the Web server 300 is the same as the hardware composition of the terminal device 100 shown in FIG. 2, so explanation is omitted.

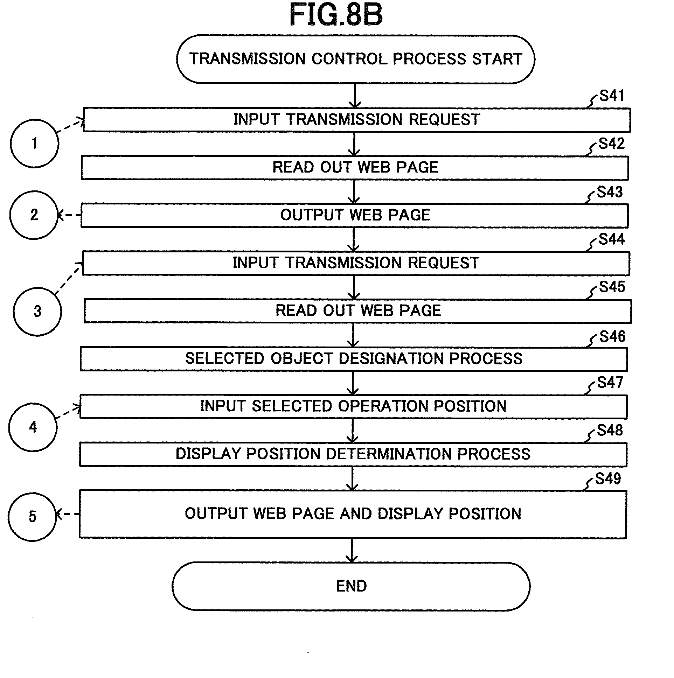

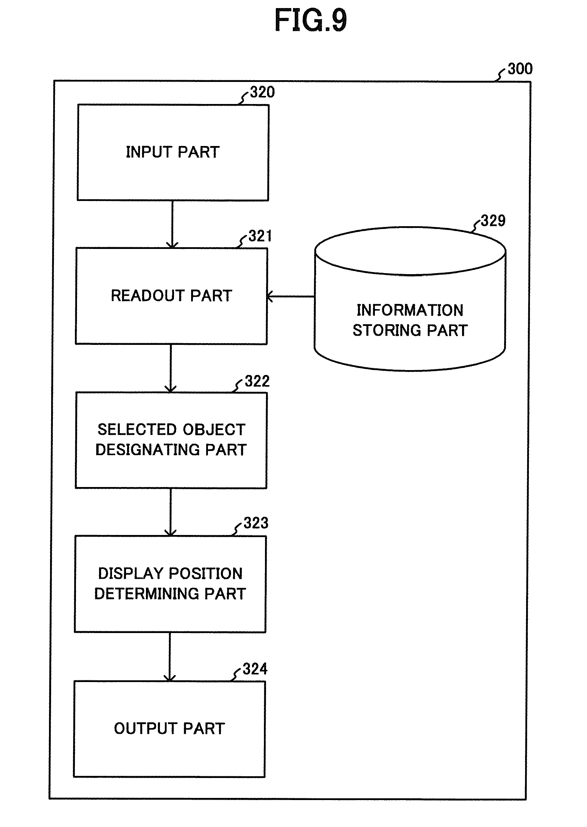

The CPU 301 executes the transmission control process shown in FIG. 8B, and through this functions as an input part 320, a readout part 321, a selected object designating part 322, a display position determining part 323 and an output part 324, as shown in FIG. 9. In addition, the CPU 301 works with the hard disk 304 shown in FIG. 7 to function as the information storing part 329 shown in FIG. 9.

The input part 320 inputs from the LAN card 306 shown in FIG. 7 the transmission requests respectively transmitted by the terminal device 100 in steps S22 and S27 of FIG. 8A, and the data indicating the selection operation position transmitted in step S28.

The readout part 321 reads out the Web page whose transmission was requested by the transmission request, from the information storing part 390.

The selected object designating part 322 designates a selected object from one or multiple objects in the Web page that was read out.

The display position determining part 323 determines the display position of the Web page that was read out so that the display position of the selected object is within a prescribed range with the selection operation position as the reference.

The output part 324 outputs the Web page that was read out and the determined display position to the LAN card 306 shown in FIG. 7.

The information storing part 390 stores multiple pieces of HTML data indicating Web pages recorded in advance by the administrator of the Web server 300.

Next, the transmission control process executed by the input part 320, the readout part 321, the selected object designating part 322, the display position determining part 323 and the output part 324 shown in FIG. 9 is described.

When the LAN card 306 shown in FIG. 7 receives the transmission request, the input part 320 shown in FIG. 9 begins execution of the transmission control process shown in FIG. 8B.

When execution of the transmission control process begins, the input part 320 inputs from the LAN card 306 the transmission request transmitted from the terminal device in step S22 of FIG. 8A (step S41).

Here, the explanation will cite as an example a case wherein the Web page whose transmission is requested by the transmission request is the Web page WP1 shown in FIG. 5A.

Next, the readout part 321 reads out from the information storing part 390 that Web page WP1 whose transmission was requested by the transmission request (step S42).

Following this, the output part 324 outputs the Web page WP1 that was read out to the LAN card 306 (step S43). Following this, the LAN card 306 transmits the Web page WP1 to the terminal device 100.

The terminal device 100 receives the Web page WP1 and displays the received Web page WP1 in step S23 of FIG. 8A. Following this, the user of the terminal device 100 accomplishes a selection operation selecting the link LK1 in the Web page WP1 shown in FIG. 5A on the terminal device 100. The terminal device 100 transmits to the Web server 300 a transmission request requesting transmission of the Web page WP2 linked to the link LK1 in accordance with this operation.

Following this, the input part 320 inputs from the LAN card 306 the transmission request transmitted from the terminal device 100 in step S27 of FIG. 8A (step S44).

Here, the explanation will cite as an example a case where the Web page whose transmission was requested by the transmission request is the Web page WP2 shown in FIG. 5B.

Next, the readout part 321 reads out from the information storing part 390 the Web page WP2 whose transmission was requested by the transmission request (step S45).

Following this, the readout part 321 designates the link LK2 in the Web page WP2 shown in FIG. 5B as the selected object by executing the same process as in step S09 of FIG. 3 (step S46).

Next, the input part 320 inputs from the LAN card 306 shown in FIG. 7 data indicating the selection operation position transmitted from the terminal device 100 in step S28 of FIG. 8A (step S47).

Next, the display position determining part 323 shown in FIG. 9 executes a display position determination process that determines the display position of the Web page WP2 in the window WD1 so that the selected object LK2 is displayed within a prescribed range with the selection operation position as the reference, by executing the same process as in step S10 of FIG. 3 (step S48). The prescribed range with the selection operation position as the reference is for example a range a prescribed distance from the selection operation position, the same as in the first preferred embodiment.

Following this, the output part 324 outputs to the LAN card 306 shown in FIG. 7 the Web page WP2 that was read out and the data indicating the determined display position (step S49), and then concludes execution of the transmission control process. Following this, the LAN card 306 transmits to the terminal device 100 the Web page WP2 and the data indicating the display position.

The terminal device 100 receives the Web page WP2 and the data indicating the display position in step S29 of FIG. 8A and displays the Web page WP2 at the display position indicated by the received data. Through this, the selected object LK2 in the Web page WP2 is displayed within a prescribed range with the selection operation position as the reference.

<Variation of second preferred embodiment>

In the second preferred embodiment, the explanation was that the output part 324 of the Web server 300 outputs to the LAN card 306 shown in FIG. 7 the Web page WP2 read out in step S49 of FIG. 8B and the display position indicating the margin top and margin left determined in step S48. In contrast, in this variation the output part 324 modifies the margin top and margin left of the body BD of the Web page WP2 to the margin top and margin left determined in step S48. Following this, the output part 324 outputs the Web page WP2 whose margin top and margin left have been modified to the LAN card 306. Following this, the LAN card 306 transmits the Web page WP2 whose margin top and margin left have been modified to the terminal device 100. In addition, the terminal device 100 receives the Web page WP2 whose margin top and margin left have been modified, and displays the received Web page WP2 in the window WD1 shown in FIG. 5B.

<Third preferred embodiment>

In the first preferred embodiment, the selected object designating part 122 of the terminal device 100 shown in FIG. 4 was described as designating as the selected object an object having a predetermined tag. In contrast, the selected object designating part 122 of the terminal device 100 according to a third preferred embodiment designates the selected object based on the selection frequency with which the object has been selected. Below, the points of difference from the first preferred embodiment are primarily described.

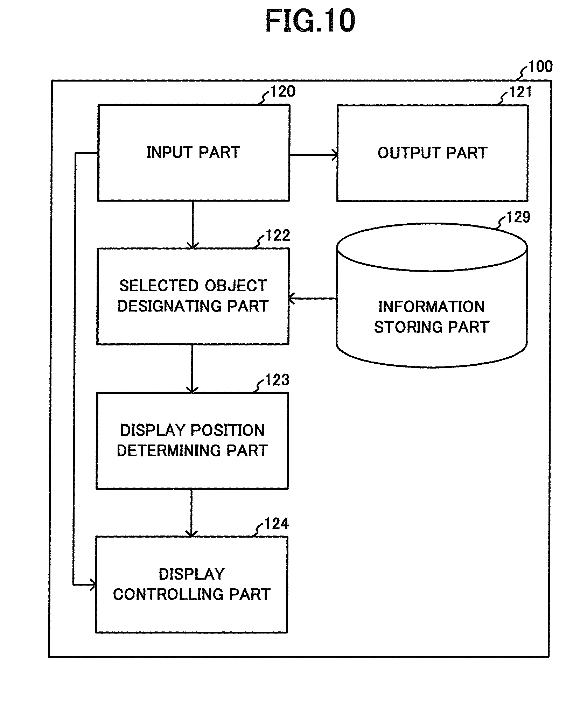

A CPU 101 of the terminal device 100 according to this preferred embodiment functions as an input part 120, an output part 121, a selected object designating part 122, a display position determining part 123 and a display controlling part 124, as shown in FIG. 10. In addition, the CPU 101 together with the hard disk 104 functions as the information storing part 129 shown in FIG. 10.

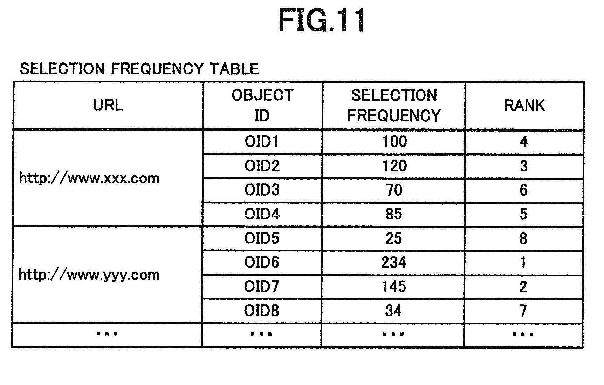

The information storing part 129 stores a selection frequency table shown in FIG. 11. In the selection frequency table, Web page URLs (Uniform Resource Locators), information identifying objects in that Web page (hereafter called the object IDs), the selection frequencies of those object and a ranking ranked in decreasing selection frequency out of one or multiple objects in that Web page are associated and stored.

The selection object designating part 122 according to this preferred embodiment executes a selected object designation process using the selection frequency table shown in FIG. 11, in step S09 of FIG. 3.

First, the selected object designating part 122 designates the URL of the Web page WP2 input in step S08. Next, the selected object designating part 122 retrieves the object ID associated with the greatest selection frequency among the selection frequencies associated with the URL of the Web page WP2 in the selection frequency table shown in FIG. 11. Following this, the selected object designating part 122 designates as the selected object the object identified by the retrieved object ID.

The more an object has been selected in the past by the user, the greater the probability of this object being selected in the future is considered to be. Consequently, with this kind of composition, the terminal device 100 designates the selected object on the basis of the selection frequency of the object, and consequently it is possible to designate the selected object with good accuracy.

<Fourth preferred embodiment>

In the second preferred embodiment, the selected object designating part 322 of the Web server 300 shown in FIG. 9 was described as designating as the selected object an object having a predetermined tag. In contrast to this, the selected object designating part 322 of the Web server 300 according to a fourth preferred embodiment designates the selected object based on the selection frequency with which the object has been selected, the same as the selected object designating part 122 of the terminal device 100 described with the third preferred embodiment. Below, the points of difference from the second preferred embodiment are primarily described.

The information storing part 329 of the Web server 300 shown in FIG. 9 stores the selection frequency table shown in FIG. 11.

The selected object designating part 322 according to this preferred embodiment executes the same process as the selected object designation process described with the third preferred embodiment using the selection frequency table shown in FIG. 11, in step S46 of FIG. 8B.

<Fifth preferred embodiment>

In the third preferred embodiment, the selected object designating part of the terminal device 100 shown in FIG. 10 was described as designating the selected object based on the selection frequency with which that object has been selected. In contrast, the selected object designating part 122 of the terminal device 100 according to a fifth preferred embodiment designates the selected object based on the change in the selection frequency with which that object has been selected. Below, the points of difference from the third preferred embodiment are primarily described.

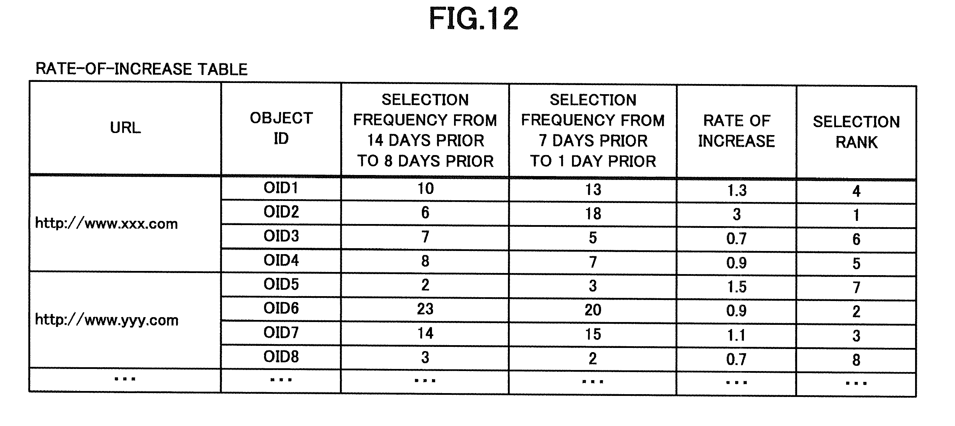

The information storing part 129 stores a rate-of-increase table shown in FIG. 12. In the rate-of-increase table, URLs of Web pages, the object IDs of objects in that Web page, the selection frequencies of those objects in a first period from seven days prior to one day prior, the selection frequencies of those objects in a second period from 14 days prior to 8 days prior, the percentage of increase from the selection frequency in the second period to the selection frequency in the first period (hereafter called the rate of increase), and a ranking that ranks the rate of increase in decreasing order for one or multiple objects in that Web page, are associated and stored.

The selected object designating part 122 according to this preferred embodiment executes the selected object designation process using the rate-of-increase table shown in FIG. 12, in step S09 of FIG. 3.

First, the selected object designating part 122 designates the URL of the Web page WP2 input in step S08. Next, the selected object designating part 122 retrieves the object ID associated with the highest rate of increase among the rates of increase associated with the URL of the Web page WP2 in the rate-of-increase table shown in FIG. 12. Following this, the selected object designating part 122 designates the object identified by the retrieved object ID as the selected object.

The greater the increase in the frequency with which an object has been selected by the user, the greater the probability of this object being selected by the user in the future is considered to be. Consequently, with this kind of composition, the terminal device 100 designates the selected object on the basis of the rate of increase in the selection frequency of the object, and consequently it is possible to designate the selected object with good accuracy.

<Sixth preferred embodiment>

In the fourth preferred embodiment, the selected object designating part 322 of the Web server 300 shown in FIG. 9 was described as designating the selected object based on the selection frequency with which that object has been selected. In contrast to this, the selected object designating part 322 of the Web server 300 according to a sixth preferred embodiment designates the selected object based on the rate of increase in the selection frequency with which the object has been selected, the same as the selected object designating part 122 of the terminal device 100 described in the fifth preferred embodiment. Below, the points of difference from the fourth preferred embodiment are primarily described.

The information storing part 329 of the Web server 300 shown in FIG. 9 stores the rate-of-increase table shown in FIG. 12.

The selected object designating part 322 according to this preferred embodiment executes the same process as the selected object designation process described in the fifth preferred embodiment using the rate-of-increase table shown in FIG. 12, in step S46 of FIG. 8B.

<Seventh preferred embodiment>

In the third preferred embodiment, the selected object designating part 122 of the terminal device 100 shown in FIG. 10 was described as designating the selected object based on the selection frequency with which that object was selected, regardless of the user using the terminal device 100. In contrast, the selected object designating part 122 of the terminal device 100 according to a seventh preferred embodiment designates the selected object on the basis of the frequency with which that object was selected by the user using the terminal device 100. Below, the points of difference from the third preferred embodiment are primarily described.

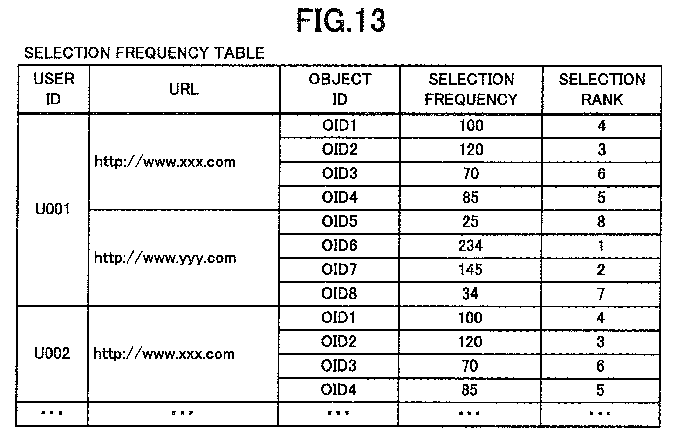

The information storing part 129 stores the selection frequency table shown in FIG. 13. In the selection frequency table, information identifying the users (hereafter called the user IDs), the URLs of the Web page, the object IDs of object in those Web pages, the selection frequencies of those objects, and the ranking of the objects in those Web pages are associated and stored.

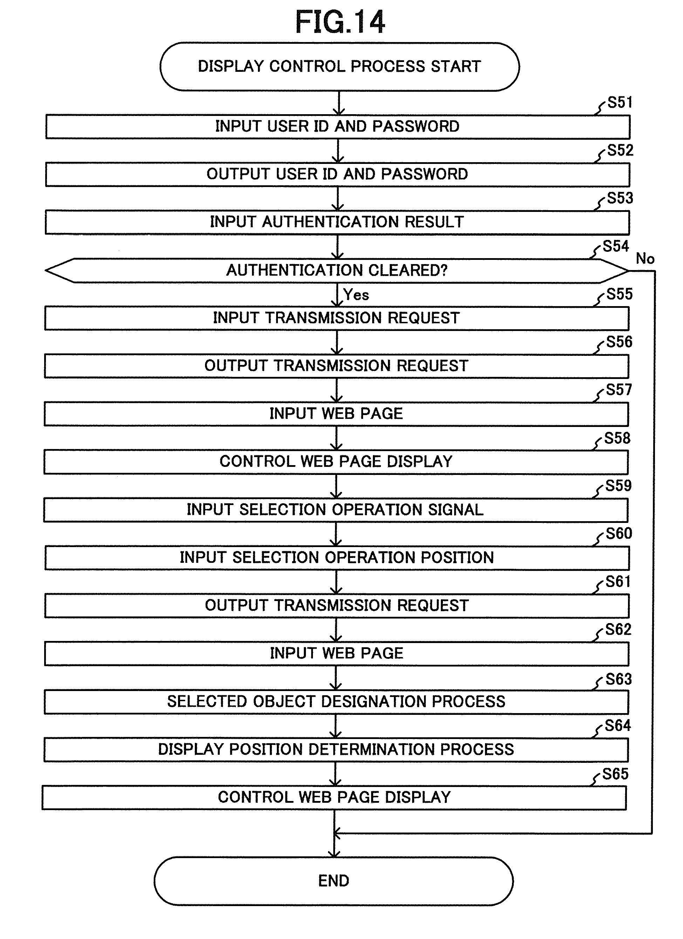

The input part 120, the output part 121, the selected object designating part 122, the display position determining part 123 and the display controlling part 124 of the terminal device 100 shown in FIG. 10 execute the display control process shown in FIG. 14 and not the display control process shown in FIG. 3 when the operator 111 shown in FIG. 2 outputs an operation signal.

When the display control process begins, the input part 120 inputs from the operator 111 the user ID of the user using the terminal device 100 and the password of that user (step S51).

Next, the output part 121 outputs the input user ID and password to the LAN card 106 shown in FIG. 2 (step S52). Following this, the LAN card 106 transmits the user ID and password to the Web server 300.

The Web server 300 stores in advance multiple user IDs identifying users and passwords of those users, associated with each other. Upon receiving the user ID and password from the terminal device 100, the Web server 300 retrieves the password stored associated with that user ID. Following this, the Web server 300 determines that the user authentication is cleared when the received password and the retrieved password match. In contrast, when the received password and the retrieved password do not match, the Web server 300 determines that user authentication has not cleared. Following this, the Web server 300 returns to the terminal device 100 data indicating the authentication result.

Following this, the input part 120 inputs data indicating the authentication result received from the Web server 300, from the LAN card 106 shown in FIG. 2 (step S53). Following this, the input part 120 determines whether or not the authentication result indicated by the input data is a result that authentication was cleared (step S54).

At this time, when the input part 120 determines that the authentication result is that authentication was not cleared (step S54: No), execution of the display control process concludes.

In contrast, when the input part 120 determines that the result is that authentication was cleared (step S54: Yes), the same process as in steps S01 through S08 shown in FIG. 3 is executed (steps S55 to S62). Through this, the terminal device 100 displays the Web page WP1 shown in FIG. 5A, selects the link LK1 of the Web page WP1 and receives from the Web server 300 the Web page WP2 linked to that link LK1.

Following this, the selected object designating part 122 executes the selected object designation process using the selection frequency table shown in FIG. 13 (step S63).

First, the selected object designating part 122 designates the URL of the Web page WP2. Next, the selected object designating part 122 retrieves the object ID associated with the greatest selection frequency from among the selection frequencies associated with the user ID input in step S51 and the URL of the Web page WP2 in the selection frequency table shown in FIG. 13. Following this, the selected object designating part 122 designates as the selected object the object identified by the retrieved object ID.

With this composition, the terminal device 100 designates the selected object based on the frequency with which the user of the terminal device 100 has selected that object, and consequently it is possible to designate the selected object with good accuracy.

<Eighth preferred embodiment>

In the fourth preferred embodiment, the selected object designating part 322 of the Web server 300 shown in FIG. 9 was described as designated the designated object based on the selection frequency with which that object has been selected. In contrast, the selected object designating part 322 of the Web server 300 according to an eighth preferred embodiment designates the selected objected based on the frequency with which that object has been selected by the user of the terminal device 100, the same as the selected object designating part 122 of the terminal device 100 described with the seventh preferred embodiment. Below, the points of different from the fourth preferred embodiment are primarily described.

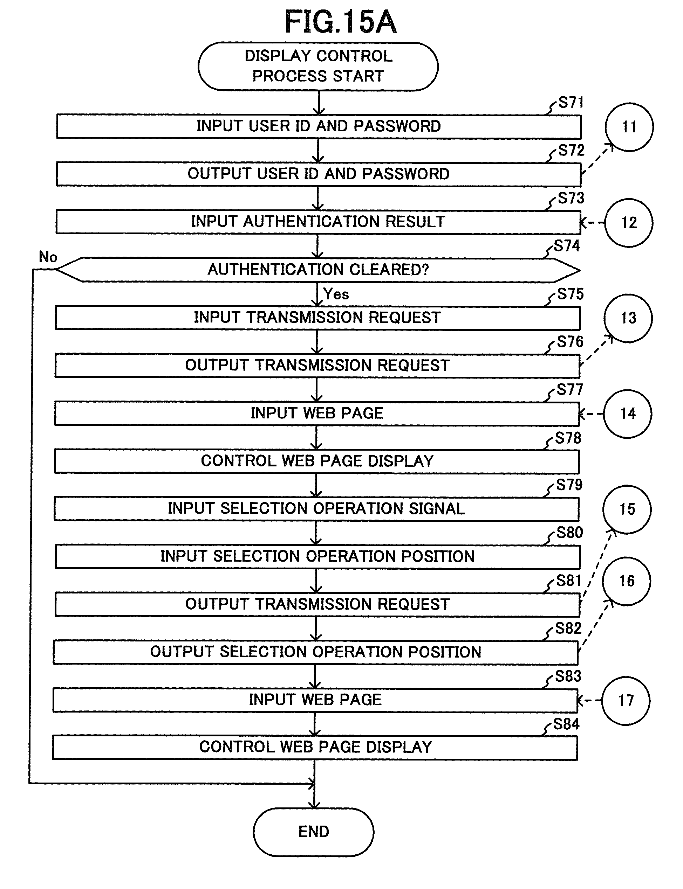

The terminal device 100 according to this preferred embodiment begins execution of the display control process shown in FIG. 15A and not the display control process shown in FIG. 8A upon being operated by a user.

When execution of the display control process begins, the terminal device 100 executes the same process as in steps S51 through S53 of FIG. 14 (steps S71 to S73). Through this, the terminal device 100 receives from the Web server 300 data indicating the authentication results of user authentication accomplished by the Web server 300 using a user ID identifying the user of the terminal device 100 and the password of that user.

Following this, the input part 120 determines whether or not the authentication result of user authentication is a result that authentication was cleared (step S74).

At this time, when the input part 120 determines that the authentication result is that authentication was not cleared (step S74: No), execution of the display control process concludes.

In contrast, when the input part 120 determines that the result is that authentication was cleared (step S74: Yes), the same process as in steps S21 through S30 of FIG. 8A are executed (steps S75 to S84) and then execution of the display control process concludes.

Next, the Web server 300 according to this preferred embodiment is described.

The information storing part 329 of the Web server 300 shown in FIG. 9 stores the selection frequency table shown in FIG. 13. In addition, the information storing part 329 stores in advance for multiple users a user ID identifying the user and a password for that user.

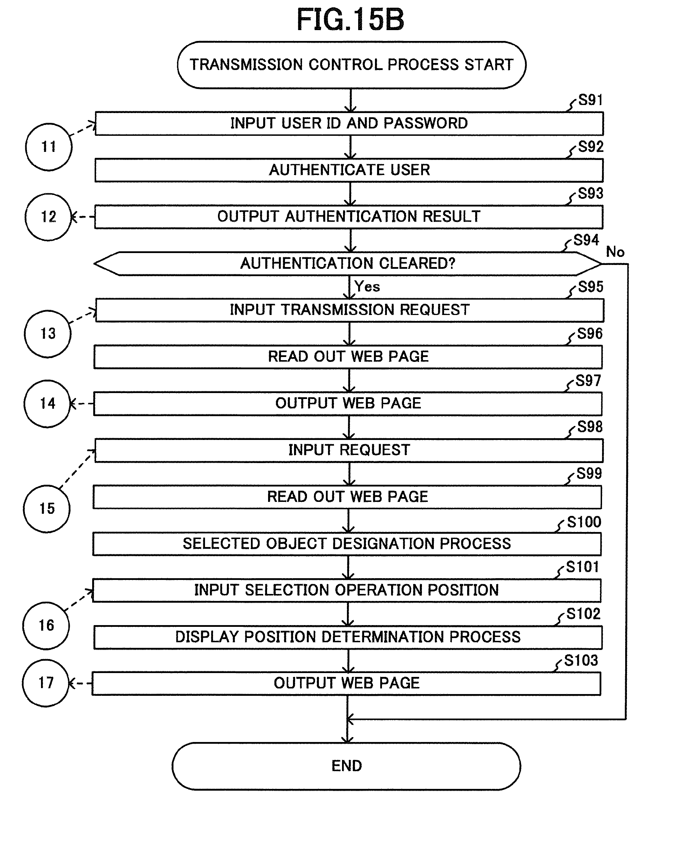

When the LAN card 306 shown in FIG. 7 receives a transmission request, the input part 320 shown in FIG. 9 begins execution of the transmission control process shown in FIG. 15B and not the transmission control process shown in FIG. 8B.

When execution of the transmission control process begins, the input part 320 inputs from the LAN card 306 shown in FIG. 7 the user ID and password received from the terminal device 100 in step S72 of FIG. 15A (step S91).

Next, the input part 320 retrieves the password stored in the information storing part 329 and associated with the input user ID. Following this, the input part 320 determines that user authentication has cleared when the input password and the retrieved password match. In contrast, when the input password and the retrieved password do not match, the input part 320 determines that user authentication has not cleared (step S92).

Following this, the output part 324 outputs data indicating the authentication result to the LAN card 306 shown in FIG. 7 (step S93). Following this, the LAN card 306 transmits the data indicating the authentication result to the terminal device 100.

Next, when the input part 320 determines that user authentication has not cleared (step S94: No), the output part 3234 concludes execution of the transmission control process.

In contrast, when the input part 320 determines that user authentication has cleared (step S94: Yes), the same process as in steps S41 through S45 of FIG. 8B is executed (steps S95 to S99). Through this, the Web page WP2 transmission of which was requested by the terminal device 100 is read out from the information storing part 390.

Following this, the selected object designating part 322 executes the same process as the selected object designation process described in the seventh preferred embodiment using the selection frequency table shown in FIG. 13.

Next, after the same processes as in steps S47 through S49 of FIG. 8B are executed (steps S101 to S103), execution of the transmission control process concludes.

<Ninth preferred embodiment>

In the fifth preferred embodiment, the selected object designating part 122 of the terminal device 100 shown in FIG. 10 Web server 300 was described as designating the selected object based on changes in the selection frequency with which the object was selected regardless of the user using the terminal device 100. In contrast, the selected object designating part 122 of the terminal device 100 according to a ninth preferred embodiment designates the selected object on the basis of changes in the frequency with which that object was selected by the user of the terminal device 100. Below, the points of difference from the fifth preferred embodiment are primarily described.

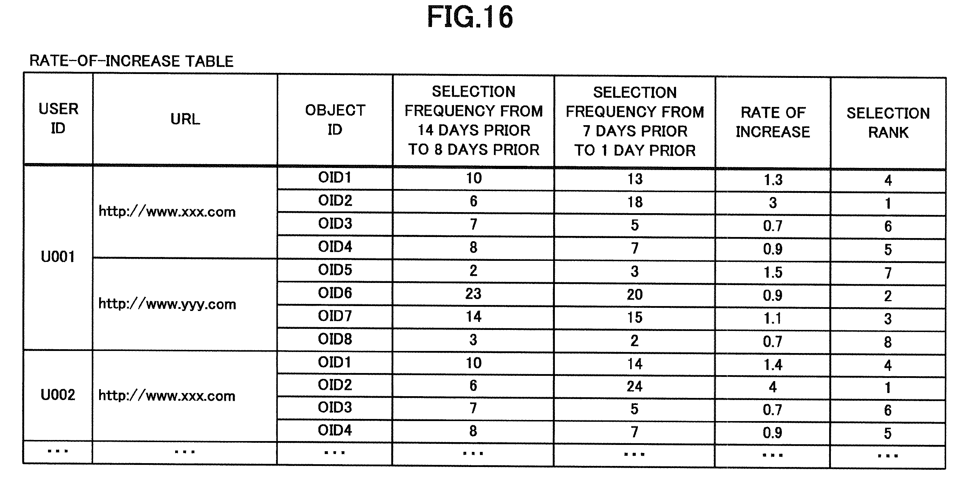

The information storing part 129 stores the rate-of-increase table shown in FIG. 16. In the rate-of-increase table, user IDs identifying the users of the terminal device, the URLs of Web pages, the object IDs of objects in those Web pages, the selection frequencies of those objects by those users in a first period from seven days prior to one day prior, the selection frequencies of those objects in a second period from 14 days prior to 8 days prior, the percentage of increase from the selection frequency in the second period to the selection frequency in the first period (hereafter called the rate of increase), and a ranking of the objects, are associated and stored.

The selected object designating part 122 according to this preferred embodiment executes the selected object designation process using the rate-of-increase table shown in FIG. 16, in step S63 of FIG. 14.

First, the selected object designating part 122 designates the URL of the Web page WP2 input in step S62. Next, the selected object designating part 122 retrieves the object ID associated with the highest rate of increase among the rates of increase associated with the URL of the Web page and the user ID input in step S51, in the rate-of-increase table shown in FIG. 16. Following this, the selected object designating part 122 designates the object identified by the retrieved object ID as the selected object.

With this kind of composition, the terminal device 100 designates the selected object on the basis of the change in the frequency with which the user of the terminal device 100 has selected the object, and consequently it is possible to designate the selected object with good accuracy.

<Tenth preferred embodiment>

In the sixth preferred embodiment, the selected object designating part 322 of the Web server 300 shown in FIG. 9 was described as designating the selected object based on the rate-of-increase in the selection frequency with which that object is selected. In contrast to this, the selected object designating part 322 of the Web server 300 according to a tenth preferred embodiment designates the selected object based on the rate of increase in the selection frequency with which the object is selected by the user of the terminal device 100, the same as the selected object designating part 122 of the terminal device 100 described in the ninth preferred embodiment. Below, the points of difference from the sixth preferred embodiment are primarily described.

The information storing part 329 of the Web server 300 shown in FIG. 9 stores the rate-of-increase table shown in FIG. 16.

The selected object designating part 322 according to this preferred embodiment executes the same process as the selected object designation process described in the ninth preferred embodiment using the rate-of-increase table shown in FIG. 16, in step S100 of FIG. 15B.

<Eleventh preferred embodiment>

In the ninth preferred embodiment, the selected object designating part 122 of the terminal device 100 shown in FIG. 10 was described as designating the selected object on the basis of the change in frequency with which the object was selected by the user of the terminal device 100. In contrast, the selected object designating part 122 of the terminal device 100 according to an eleventh preferred embodiment designates the selected object based on the attributes of the user using the terminal device 100. Below, the points of difference from the ninth preferred embodiment are primarily described.

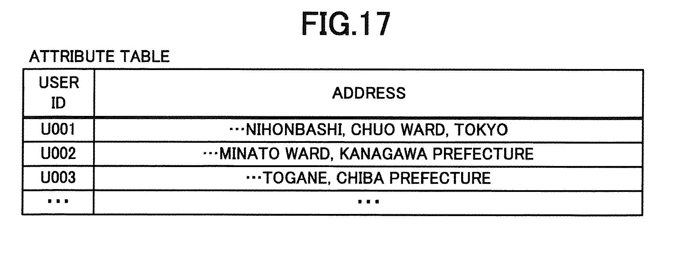

The information storing part 129 stores the attribute table shown in FIG. 17. In the attribute table, the user ID identifying a user and an attribute of that user are stored associated with each other, for multiple users. In this preferred embodiment, the description cites the address of the user as one example of the user's attribute, but this is intended to be illustrative and not limiting, for it would be fine to use any out of the sex, age, occupation and work location of the user as the user's attribute.

The selected object designating part 122 according to this preferred embodiment executes a selected object designation process using the attribute table shown in FIG. 17, in step S63 of FIG. 14.

First, the selected object designating part 122 acquires a character or character string the object indicates for each of one or multiple objects in the Web page WP2, by analyzing the HTML indicating the Web page WP2 input in step S62.

Next, the selected object designating part 122 acquires the attribute associated with the user ID input in step S51 in the attribute table shown in FIG. 17, and sets as the selected object an object indicating part or all of the character or character string matching or containing the character or character string indicating the acquired attribute.

Here, the description cites an example in which the user ID of the user of the terminal device 100 is "U001", and the link LK2 in the Web page WP2 indicates the character string "Tokyo."

The selected object designating part 122 acquires the address "...Nihonbashi, Chuo Ward, Tokyo" associated with the user ID "U001" in the attribute table shown in FIG. 17, and sets as the selected object the link LK2 indicating the text "Tokyo" contained in the acquired address.

Normally, a user focuses on characters or character strings indicating the user's own attributes and often selects the characters or character strings focused on. Consequently, with this kind of composition, the terminal device 100 designates the selected object on the basis of an attribute of the user using the terminal device 100, and consequently it is possible to designate the selected object with good accuracy.

<Twelfth preferred embodiment>

In the tenth preferred embodiment, the selected object designating part 322 of the Web server 300 shown in FIG. 9 was described as designating the selected objected on the basis of the rate of increase in the frequency with which the object was selected by the user of the terminal device 100. In contrast, the selected object designating part 322 of the Web server 300 according to a twelfth preferred embodiment designates the selected object based on the attributes of the user using the terminal device 100, the same as in the selected object designating part 122 of the terminal device 100 described in the eleventh preferred embodiment. Below, the points of difference from the tenth preferred embodiment are primarily described.

The information storing part 329 of the Web server 300 shown in FIG. 9 stores the attribute table shown in FIG. 17.

The selected object designating part 322 according to this preferred embodiment executes the same process as the selected object designation process described in the eleventh preferred embodiment, using the attribute table shown in FIG. 17, in step S100 of FIG. 15B.

<Thirteenth preferred embodiment>

In the first preferred embodiment, the display position determining part 123 of the terminal device 100 shown in FIG. 4 was described as determining the display position of the Web page so that the selected object is displayed within a prescribed range with the selection operation position as the reference. In contrast, the display position determining part 123 of the terminal device 100 according to a thirteenth preferred embodiment determines the display position of the Web page so that the selected object is displayed within a prescribed range using as the reference the operation position, or the display position of the cursor after a prescribed time has elapsed from when the selection operation was accomplished. Below, the points of difference from the first preferred embodiment are primarily described.

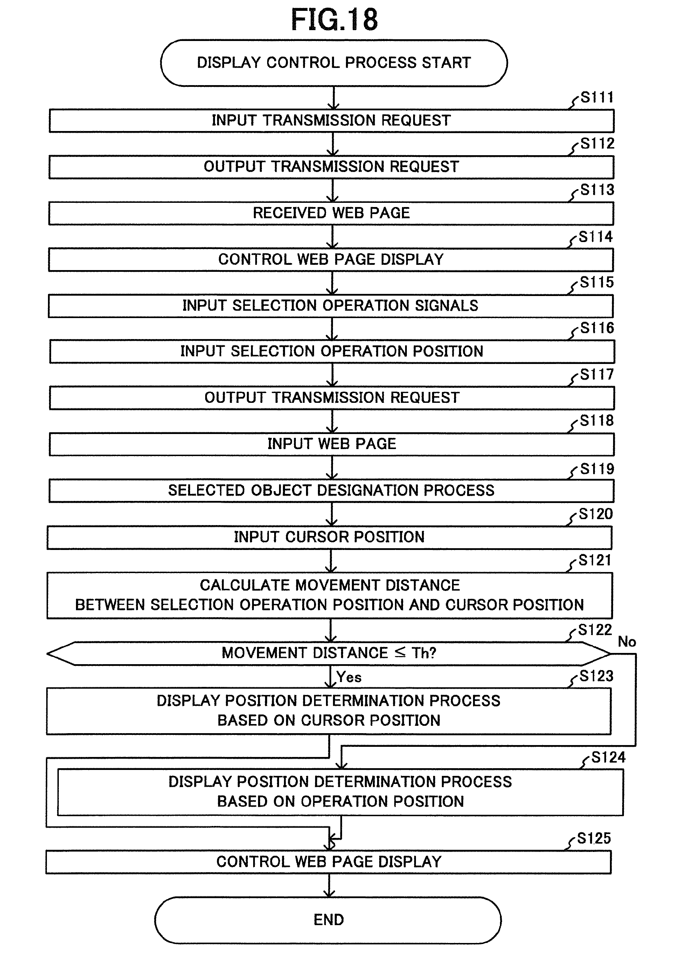

When an operation signal is input from the operator 111 shown in FIG. 2, the input part 120 shown in FIG. 4 begins the display control process shown in FIG. 18, not the display control process shown in FIG. 3.

When execution of the display control process begins, the same processes as in steps S01 through S09 shown in FIG. 3 are executed (steps S111 to S119).

Following this, the input part 120 waits until a prescribed time has elapsed from the time when the selection operation position was input in step S 116 and then inputs the display position of the cursor CR from the OS (step S120). This prescribed time is, for example, the time from when the terminal device 100 inputs the selection operation position until the Web page linked to the selected link is received. It is possible for a suitable value for this prescribed time to be determined by a person skilled in the art through experimentation.

Following this, the display position determining part 123 calculates the movement distance of the cursor CR from the selection operation position input in step S116 to the display position of the cursor CR input in step S120 (step S121).

Next, the display position determining part 123 determines whether or not the calculated movement distance is less than a prescribed threshold value Th (step S122). This threshold value Th is the maximum value of the distance over which it is possible for a user to move a cursor while tracking the cursor with the eyes, from the time when the selection operation position was input until the prescribed time has elapsed. It is possible for a suitable value for this threshold value Th to be determined by a person skilled in the art through experimentation.

When the display position determining part 123 determines in step S 122 that the movement distance is less than the prescribed threshold value Th (step S122: Yes), it is determined that the user is focused in the neighborhood of the cursor CR. Next, the display position determining part 123 executes the display position determination process described in the first preferred embodiment based on the display position of the cursor, not the selection operation position.

Specifically, the display position determining part 123 determines the display position of the Web page WP2 in the window WD1 so that the selected object is displayed within a prescribed range with the display position of the cursor CR as the reference.

In contrast, when the display position determining part 123 determines that the movement distance is larger than the prescribed threshold value Th (step S122: No), it is determined that the user is not focused on the neighborhood of the cursor CR but is still focused on the neighborhood of the selection operation position. For example, this is a case in which the user's finger has slipped and the position of the cursor CR has deviated contrary to the user's will.

Next, the display position determining part 123 executes the display position determination process based on the selection operation position described in the first preferred embodiment (step S124).

Specifically, the display position determining part 123 determines the display position of the Web page WP2 in the window WD1 so that the selected object is displayed within a prescribed range with the selection operation position as the reference.

After the process of step S 123 or step S 124 has been executed, the same process as in step S11 of FIG. 3 is executed and through this the Web page WP2 is displayed at the display position determined by the display position determining part 123 (step S 125). Following this, execution of the display control process concludes.

With this kind of composition, the terminal device 100 determines that the user is focused on the neighborhood of the display position of the cursor CR when the movement distance from the selection operation position to the display position of the cursor CR after a prescribed time has elapsed from the selection operation is shorter than a prescribed distance Th. Consequently, the terminal device determines the display position of the Web page WP2 so that the selected object LK2 is displayed within a prescribed range with the display position of the cursor CR as the reference, so there is little or no need for user to move the line of sight to the selected object LK2. Hence, it is possible for the terminal device 100 to display a Web page viewable with less of a burden than in the past.

In addition, with this composition the terminal device 100 determines that the user is still focused on the neighborhood of the selection operation position when the movement distance is longer than the prescribed distance Th. Consequently, the terminal device 100 determines the display position of the Web page WP2 so that the selected object LK2 is displayed within a prescribed range with the selection operation position as the reference, so there is little or no need for the user to move the line of sight to the selected object LK2. Hence, it is possible for the terminal device 100 to display a Web page viewable with less of a burden than in the past.

In the second through thirteenth preferred embodiments, it is possible to apply variations that are the same as variation 1 and variation 2 of the first preferred embodiment.

<Fourteenth preferred embodiment>

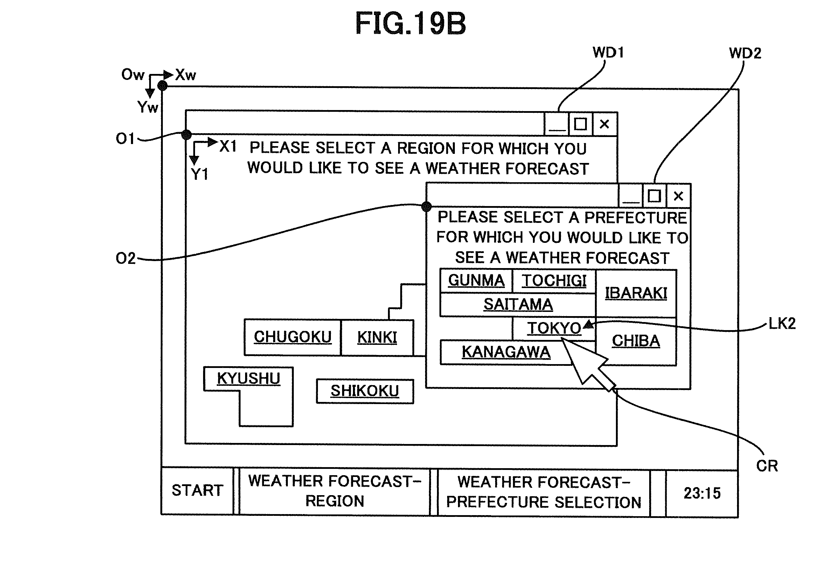

In the first preferred embodiment, the display position determining part 123 of the terminal device 100 shown in FIG. 4 was described as determining the display position of the Web page WP2 in the window WD1 shown in FIGS. 5A and 5B so that the selected object LK2 is displayed within a prescribed range with the selection operation position as the reference. In contrast, the display position determining part 123 of the terminal device 100 according to a fourteenth preferred embodiment determines the display position of a window WD2 displaying the Web page WP2 as shown in FIG. 19B so that the selected object LK2 is displayed within a prescribed range with the selection operation position as the reference. Below, the points of difference from the first preferred embodiment are primarily described.

When an operation signal is input from the operator 111 of the terminal device 100 shown in FIG. 2, the input part 120 shown in FIG. 4 begins the display control process shown in FIG. 3.

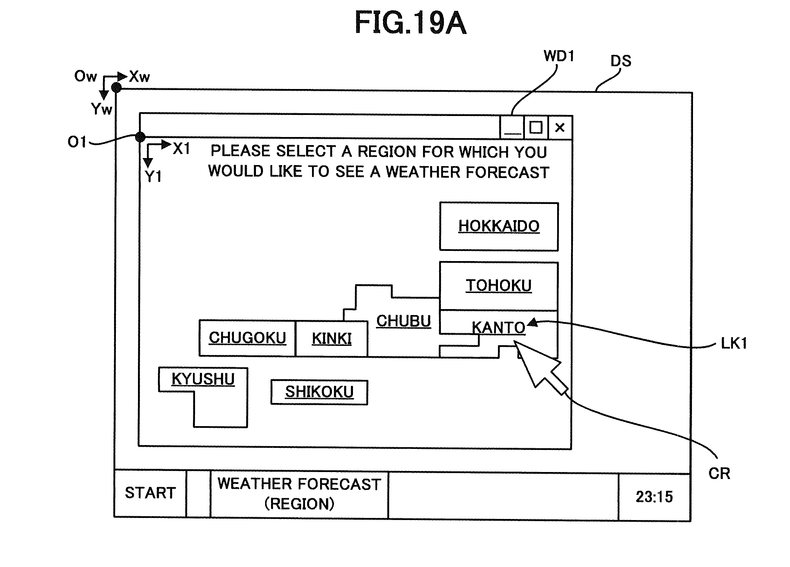

First, the processes from steps S01 through S05 are executed. Through this, the terminal device 100 displays the Web page WP1 in the window WD1 as shown in FIG. 19A, and selects the link LK1.

Following this, the input part 120 inputs the selection operation position and the display position of the window WD1 in a display screen DS of the displaying part 108 (step S06).

The selection operation position is indicated by the coordinate value (X1s, Y1s) in the X1Y1 coordinate system described in the first preferred embodiment. In addition, the display position of the window WD1 is indicated by the coordinate value (Xw1, Yw1) in an XwYw coordinate system with the main scanning direction in the +Xw direction, the auxiliary scanning direction in the +Yw direction and the upper leftmost corner facing the display screen DS as the origin Ow.

Following this, the processes from steps S07 through S09 are executed. Through this, the terminal device 100 receives the Web page WP2 and designates the link LK2 in the Web page WP2 as the selected object.

Following this, the display position determining part 123 executes a display position determination process that determines the display position of a new window WD2 displaying the Web page WP2 so that the selected object LK2 displayed in the window WD2 is within a prescribed range with the selection operation position as the reference (step S10).

In the display position determination process of this preferred embodiment, the display position determining part 123 first designates the display position of the selected object LK2 in the window WD2 by analyzing the HTML indicating the Web page WP2.

The display position of the selected object LK2 in the window WD2 is expressed by the coordinate value (X21, Y21) in an X2Y2 coordinate system with the main scanning direction in the +X2 direction and the auxiliary scanning direction in the +Y2 direction, with an upper leftmost point 02 facing the window WD2 as the reference.

Next, the display position determining part 123 calculates the coordinate value (Xws, Yws), which is the selection operation position (X1s, Y1s) expressed by the X1Y1 coordinate system with an upper leftmost point O1 of the window WD1 as the reference, converted into an XwYw coordinate system with an upper leftmost point Ow of the display screen DS as the reference, using the below equations (3) and (4).

$$Xws = X1s + Xw1 \qquad (3)$$

$$Yws = Y1s + Yw1 \qquad (4)$$

However, Xw1 is the Xw coordinate value of the position displayed by the upper leftmost point O1 in the window WD1, and Yw1 is the Yw coordinate value of the position displayed by the upper leftmost point O1 in the window WD1.

Following this, the display position determining part 123 calculates the display position (Xw2, Yw2), which is the position displayed by the upper leftmost point O1 in the window WD2 such that the selected object LK2 is within the prescribed range with the selection operation position as the reference, expressed in the XwYw coordinate system, using the below equations (5) and (6).

$$Xw2 = Xws - X2l \qquad (5)$$

$$Yw2 = Yws - Y2l \qquad (6)$$

Following this, the display controlling part 124 shown in FIG. 4 controls the displaying part 108 shown in FIG. 2 so that the window WD2 is displayed at the display position determined by the display position determining part 123 and the Web page WP2 is displayed in the window WD2 (step S11).

Following this, the display controlling part 124 concludes execution of the display control process.

With this kind of composition, the terminal device 100 determines the display position of the window WD2 displaying the Web page WP2 so that the selected object LK2 is displayed within a prescribed range with the selection operation position as the reference, and creates the window WD2 that displays the Web page WP2 at the determined display position. Consequently, even when a new window is displayed, it is possible for the terminal device 100 to display the link LK2 conjectured to be selected by the user within a prescribed range of where the user is focusing.

<Fifteenth preferred embodiment>

In the second preferred embodiment, the display position determining part 323 of the Web server 300 shown in FIG. 9 was described as determining the display position of the Web page WP2 in the window WD1 shown in FIG. 5 so that the selected object LK2 is displayed within a prescribed range with the selection operation position as the reference. In contrast, the display position determining part 323 of a Web server 300 according to a fifteenth preferred embodiment determines the display position of a window WD2 that displays the Web page WP2 so that the selected object LK2 is displayed within a prescribed range with the selection operation position as the reference. Below, the points of difference from the second preferred embodiment are primarily described.

The display position determining part 323 of the Web server 300 according to this preferred embodiment executes the same display position determination process described in the fourteenth preferred embodiment, in step S48 of FIG. 8B.

In addition, the display controlling part 124 of the terminal device 100 according to this preferred embodiment controls the displaying part 108 shown in FIG. 2 so that the window WD2 is displayed at the display position determined by the Web server 300 and the Web page WP2 is displayed in the window WD2, in step S30 of FIG. 8A.

In order to select an object, it is necessary for the user to focus attention on that object. Consequently, the selected object conjectured to be selected by the user can also be termed the object conjectured to be the focus of the user's attention (hereafter, the focus object).

It is possible to mutually combine the first through fifteenth preferred embodiments. It is naturally possible to provide a terminal device 100 or a Web server 300 provided with a composition for realizing the functions according to any of the first through the fifteenth preferred embodiments, and it is also possible to provide a system comprising multiple devices that is a system provided as an entire system with a composition for realizing the functions according to any of the first through fifteenth preferred embodiments.

It is possible to provide a terminal device 100 or a Web server 300 provided in advance with a composition for realizing the functions according to any of the first through fifteenth preferred embodiments, and it is also possible to cause an existing terminal device 100 or Web server 300 to function as the terminal device 100 or Web server 300 according to the first through fifteenth preferred embodiments through application of a program. That is to say, it is possible to apply a display control program or transmission control program for realizing the various functional compositions of the terminal device 100 or Web server 300 shown by example in any of the first through fifteenth preferred embodiments so as to be executable by a computer (CPU and/or the like) controlling an existing terminal device or Web server, and through this to cause the existing terminal device or Web server to function as the terminal device 100 or Web server 300 according to any of the first through fifteenth preferred embodiments.

The distribution method of this kind of program is arbitrary, and for example it is possible to store and distribute this program on recording media such as a memory card, a CD-ROM or a DVD-ROM and/or the like, or to distribute the program via communication media such as the Internet and/or the like. In addition, it is possible to implement the display method according to the present invention using the terminal device 100 according to any of the first through fifteenth preferred embodiments. It is possible to implement the transmission method according to the present invention using the Web server 300 according to any of the first through fifteenth preferred embodiments.

Having described and illustrated the principles of this application by reference to one or more preferred embodiments, it should be apparent that the preferred embodiments may be modified in arrangement and detail without departing from the principles disclosed herein.

Moreover, it is intended that the application be construed as including all such modifications and variations insofar as they come within the spirit and scope of the subject matter disclosed herein.

This application claims the benefit of Japanese Patent Application No. 2012-081301, filed on 30 March, 2012, the entire disclosure of which is incorporated by reference herein.

All or portions of the above-described preferred embodiments are also described in the below appendices, but the below descriptions are intended to be illustrative and not limiting to all or portions of the above-described preferred embodiments.

(Appendix 1)

A terminal device comprising:

an input part for inputting an operation position at which a selection operation is accomplished for selecting a link of a first Web page, and/or a cursor display position after a prescribed time has elapsed from when the selection operation was accomplished;

a designating part for designating an object conjectured to be paid attention to by the user from among one or multiple objects in a second Web page linked to the first Web page by the selected link;

a determining part for determining a display position for a window displaying the second Web page or a display position for the second Web page in the window so that the designated object is displayed within a prescribed range with the operation position or the cursor display position as the reference; and

a displaying part for displaying the window displaying the second Web page at the determined display position or displaying the second Web page at the determined display position for the window.

(Appendix 2)

The terminal device described in Appendix 1, further comprising:

an information storing part for storing, in multiple and associated with each other, the second Web page, an object in the second Web page, and a selection frequency with which that object has been selected or the change in the selection frequency;

wherein the designating part designates an object conjectured to be paid attention to by the user on the basis of the selection frequency or the change in the selection frequency associated with the second Web page.

(Appendix 3)

The terminal device described in Appendix 2, wherein:

the information storing part further stores identification information identifying the user, associating this information with the second Web page, the object in the second Web page and the selection frequency with which that object has been selected or the change in the selection frequency;

the input part further inputs identification information identifying the user; and

the designating part designates the object conjectured to be paid attention to by the user on the basis of the identification information identifying the user, and the selection frequency associated with the second Web page WP2 or the change in the selection frequency.

(Appendix 4)

The terminal device described in Appendix 3, wherein:

the information storing part further stores an attribute of the user, associating this attribute to the identification information identifying the user; and

the designating part designates the object conjectured to be paid attention to by the user on the basis of the attribute of the user associated with the identification information identifying the user.

(Appendix 5)

The terminal device described in any of Appendices 1 through 4, wherein:

the input part inputs both the operation position and the cursor display position; and
the determining part:

determines the display position of the window or the display position of the second Web page so that the designated object is displayed within a prescribed range with the cursor display position as the reference, when the movement distance from the operation position to the cursor display position is shorter than a prescribed distance; and
determines the display position of the window or the display position of the second Web page so that the designated object is displayed within a prescribed range with the operation position as the reference, when the movement distance is longer than a prescribed distance.

(Appendix 6)

A display control program for causing a computer to function as:

an input part for inputting an operation position at which a selection operation is accomplished for selecting a link of a first Web page, and/or a cursor display position after a prescribed time has elapsed from when the selection operation was accomplished;
a designating part for designating an object conjectured to be paid attention to by the user from among one or multiple objects in a second Web page linked to the first Web page by the selected link;
a determining part for determining a display position for a window displaying the second Web page or a display position for the second Web page in the window so that the designated object is displayed within a prescribed range with the operation position or the cursor display position as the reference; and
a display controlling part for controlling a displaying part so as to display the window displaying the second Web page at the determined display position or display the second Web page at the determined display position for the window.

(Appendix 7)

A computer-readable recording medium on which is recorded a display control program for causing a computer to function as:

an input part for inputting an operation position at which a selection operation is accomplished for selecting a link of a first Web page, and/or a cursor display position after a prescribed time has elapsed from when the selection operation was accomplished;
a designating part for designating an object conjectured to be paid attention to by the user from among one or multiple objects in a second Web page linked to the first Web page by the selected link;
a determining part for determining a display position for a window displaying the second Web page or a display position for the second Web page in the window so that the designated object is displayed within a prescribed range with the operation position or the cursor display position as the reference; and
a display controlling part for controlling a displaying part so as to display the window displaying the second Web page at the determined display position or display the second Web page at the determined display position for the window.

(Appendix 8)

A display method executed by a terminal device comprising an input part, a designating part, a determining part and a displaying part, this display method including:

an input step in which the input part inputs an operation position at which a selection operation is accomplished for selecting a link of a first Web page, and/or a cursor display position after a prescribed time has elapsed from when the selection operation was accomplished;
a designation step in which the designating part designates an object conjectured to be paid attention to by the user from among one or multiple objects in a second Web page linked to the first Web page by the selected link;

a determination step in which the determining part determines a display position for a window displaying the second Web page or a display position for the second Web page in the window so that the designated object is displayed within a prescribed range with the operation position or the cursor display position as the reference; and

a display step in which the displaying part displays the window displaying the second Web page at the determined display position or displays the second Web page at the determined display position for the window.

(Appendix 9)

A Web server, comprising:

an input part for inputting an operation position at which a selection operation is accomplished for selecting a link of a first Web page, and a request requesting transmission of a second Web page linked to the first Web page by the link;

a designating part for designating an object conjectured to be paid attention to by the user from among one or multiple objects in the second Web page;

a determining part for determining the display position of a window displaying the second Web page or the display position of the second Web page in the window, so that the determined object is displayed at the operation position or a cursor display position; and

a transmitting part for transmitting either the second Web page and the determined display position or the second Web page modified so as to be displayed at the determined display position.

(Appendix 10)

A transmission control program for causing a computer to function as:

an input part for inputting an operation position at which a selection operation is accomplished for selecting a link of a first Web page, and a request requesting transmission of a second Web page linked to the first Web page by the link;

a designating part for designating an object conjectured to be paid attention to by the user from among one or multiple objects in the second Web page;

a determining part for determining the display position of a window displaying the second Web page or the display position of the second Web page in the window, so that the determined object is displayed at the operation position or a cursor display position; and

a transmission controlling part for controlling a transmitting part so that either the second Web page and the determined display position or the second Web page modified so as to be displayed at the determined display position is transmitted.

(Appendix 11)

A computer-readable recording medium on which is recorded a transmission control program for causing a computer to function as:

an input part for inputting an operation position at which a selection operation is accomplished for selecting a link of a first Web page, and a request requesting transmission of a second Web page linked to the first Web page by the link;

a designating part for designating an object conjectured to be paid attention to by the user from among one or multiple objects in the second Web page;

a determining part for determining the display position of a window displaying the second Web page or the display position of the second Web page in the window, so that the determined object is displayed at the operation position or a cursor display position; and

a transmission controlling part for controlling a transmitting part so that either the second Web page and the determined display position or the second Web page modified so as to be displayed at the determined display position is transmitted.

(Appendix 12)

A transmission method executed by a Web server comprising an input part, a determining part, a designating part and a transmitting part, this method including:

an input step in which the input part inputs an operation position at which a selection operation is accomplished for selecting a link of a first Web page, and a request requesting transmission of a second Web page linked to the first Web page by the link;

a designation step in which the designating part designates an object conjectured to be paid attention to by the user from among one or multiple objects in the second Web page;

a determination step in which the determining part determines the display position of a window displaying the second Web page or the display position of the second Web page in the window, so that the determined object is displayed at the operation position or a cursor display position; and

a transmission step in which the transmitting part transmits either the second Web page and the determined display position or the second Web page modified so as to be displayed at the determined display position.

Reference Signs List

| 10 | Communication network |
| 100, 200 | Terminal device |
| 101, 301 | CPU |
| 102, 302 | ROM |
| 103, 303 | RAM |
| 104, 304 | Hard disk |
| 105, 305 | Media controller |
| 106, 306 | LAN card |
| 107, 307 | Video card |
| 108, 308 | Displaying part |
| 109, 309 | Keyboard |
| 110, 310 | USB interface |
| 111, 311 | Operator |
| 112, 312 | Speaker |
| 120, 320 | Input part |
| 121, 324 | Output part |
| 122, 322 | Selected object designating part |
| 123, 323 | Display position determining part |
| 124 | Display controlling part |
| 129, 329 | Information storing part |
| 190, 390 | Mouse |
| 300 | Web server |

**Claims**

1. A terminal device comprising:

an input part for inputting an operation position at which a selection operation is accomplished for selecting a link of a first Web page, and/or a cursor display position after a prescribed time has elapsed from when the selection operation was accomplished;

a designating part for designating an object conjectured to be selected by the user from among one or multiple objects in a second Web page linked to the first Web page by the selected link;

a determining part for determining a display position for a window displaying the second Web page or a display position for the second Web page in the window so that the designated object is displayed within a prescribed range with the operation position or the cursor display position as the reference; and

a displaying part for displaying the window displaying the second Web page at the determined display position or displaying the second Web page at the determined display position for the window.

2. The terminal device according to Claim 1, further comprising:

an information storing part for storing, in multiple and associated with each other, the second Web page, an object in the second Web page, and a selection frequency with which that object has been selected or the change in the selection frequency;
wherein the designating part designates an object conjectured to be selected by the user on the basis of the selection frequency or the change in the selection frequency associated with the second Web page.

3. The terminal device according to Claim 2, wherein:

the information storing part further stores identification information identifying the user, associating this information with the second Web page, the object in the second Web page and the selection frequency with which that object has been selected or the change in the selection frequency;
the input part further inputs identification information identifying the user; and
the designating part designates the object conjectured to be selected by the user on the basis of the identification information identifying the user, and the selection frequency or the change in the selection frequency associated with the second Web page.

4. The terminal device according to Claim 3, wherein:

the information storing part further stores an attribute of the user, associating this attribute to the identification information identifying the user; and
the designating part designates the object conjectured to be paid attention to by the user on the basis of the attribute of the user associated with the identification information identifying the user.

5. The terminal device according to any of Claims 1 through 4, wherein:

the input part inputs both the operation position and the cursor display position; and
the determining part:

determines the display position of the window or the display position of the second Web page so that the designated object is displayed within a prescribed range with the cursor display position as the reference, when the movement distance from the operation position to the cursor display position is shorter than a prescribed distance; and
determines the display position of the window or the display position of the second Web page so that the designated object is displayed within a prescribed range with the operation position as the reference, when the movement distance is longer than a prescribed distance.

6. A display control program for causing a computer to function as:

an input part for inputting an operation position at which a selection operation is accomplished for selecting a link of a first Web page, and/or a cursor display position after a prescribed time has elapsed from when the selection operation was accomplished;
a designating part for designating an object conjectured to be selected by the user from among one or multiple objects in a second Web page linked to the first Web page by the selected link;
a determining part for determining a display position for a window displaying the second Web page or a display position for the second Web page in the window so that the designated object is displayed within a prescribed range with the operation position or the cursor display position as the reference; and
a display controlling part for controlling a displaying part so as to display the window displaying the second Web page at the determined display position or display the second Web page at the determined display position for the window.

7. A computer-readable recording medium on which is recorded a display control program for causing a computer to function as:

an input part for inputting an operation position at which a selection operation is accomplished for selecting a link of a first Web page, and/or a cursor display position after a prescribed time has elapsed from when the selection operation was accomplished;
a designating part for designating an object conjectured to be selected by the user from among one or multiple objects in a second Web page linked to the first Web page by the selected link;
a determining part for determining a display position for a window displaying the second Web page or a display position for the second Web page in the window so that the designated object is displayed within a prescribed range with the operation position or the cursor display position as the reference; and

a display controlling part for controlling a displaying part so as to display the window displaying the second Web page at the determined display position or display the second Web page at the determined display position for the window.

8. A display method executed by a terminal device comprising an input part, a designating part, a determining part and a displaying part, this display method including:

an input step in which the input part inputs an operation position at which a selection operation is accomplished for selecting a link of a first Web page, and/or a cursor display position after a prescribed time has elapsed from when the selection operation was accomplished;

a designation step in which the designating part designates an object conjectured to be selected by the user from among one or multiple objects in a second Web page linked to the first Web page by the selected link;

a determination step in which the determining part determines a display position for a window displaying the second Web page or a display position for the second Web page in the window so that the designated object is displayed within a prescribed range with the operation position or the cursor display position as the reference; and

a display step in which the displaying part displays the window displaying the second Web page at the determined display position or displays the second Web page at the determined display position for the window.

9. A Web server, comprising:

an input part for inputting an operation position at which a selection operation is accomplished for selecting a link of a first Web page, and a request requesting transmission of a second Web page linked to the first Web page by the link;

a designating part for designating an object conjectured to be selected by the user from among one or multiple objects in the second Web page;

a determining part for determining the display position of a window displaying the second Web page or the display position of the second Web page in the window, so that the determined object is displayed at the operation position or a cursor display position; and

a transmitting part for transmitting either the second Web page and the determined display position or the second Web page modified so as to be displayed at the determined display position.

10. A transmission control program for causing a computer to function as:

an input part for inputting an operation position at which a selection operation is accomplished for selecting a link of a first Web page, and a request requesting transmission of a second Web page linked to the first Web page by the link;

a designating part for designating an object conjectured to be selected by the user from among one or multiple objects in the second Web page;

a determining part for determining the display position of a window displaying the second Web page or the display position of the second Web page in the window, so that the determined object is displayed at the operation position or a cursor display position; and

a transmission controlling part for controlling a transmitting part so that either the second Web page and the determined display position or the second Web page modified so as to be displayed at the determined display position is transmitted.

11. A computer-readable recording medium on which is recorded a transmission control program for causing a computer to function as:

an input part for inputting an operation position at which a selection operation is accomplished for selecting a link of a first Web page, and a request requesting transmission of a second Web page linked to the first Web page by the link;

a designating part for designating an object conjectured to be selected by the user from among one or multiple objects in the second Web page;

a determining part for determining the display position of a window displaying the second Web page or the display position of the second Web page in the window, so that the determined object is displayed at the operation position or a cursor display position; and

a transmission controlling part for controlling a transmitting part so that either the second Web page and the determined display position or the second Web page modified so as to be displayed at the determined display position is transmitted.

12. A transmission method executed by a Web server comprising an input part, a determining part, a designating part and a transmitting part, this method including:

an input step in which the input part inputs an operation position at which a selection operation is accomplished for selecting a link of a first Web page, and a request requesting transmission of a second Web page linked to the first Web page by the link;
a designation step in which the designating part designates an object conjectured to be selected by the user from among one or multiple objects in the second Web page;
a determination step in which the determining part determines the display position of a window displaying the second Web page or the display position of the second Web page in the window, so that the determined object is displayed at the operation position or a cursor display position; and
a transmission step in which the transmitting part transmits either the second Web page and the determined display position or the second Web page modified so as to be displayed at the determined display position.

# FIG.1

TERMINAL DEVICE 100

190

TERMINAL DEVICE 200

290

10

WEB SERVER 300

1

# FIG.2

CPU 101

ROM 102

RAM 103

HARD DISK 104

MEDIA CONTROLLER 105

LAN CARD 106

VIDEO CARD 107

KEYBOARD 109

USB INTERFACE 110

SPEAKER 112

DISPLAYING PART 108

111

100

# FIG.3

```
┌─────────────────────────────────────┐
│   DISPLAY CONTROL PROCESS START      │
└─────────────────────────────────────┘
                  │
                  ▼                        ╭S01
┌─────────────────────────────────────────┐
│       INPUT TRANSMISSION REQUEST          │
└─────────────────────────────────────────┘
                  │                        ╭S02
                  ▼
┌─────────────────────────────────────────┐
│      OUTPUT TRANSMISSION REQUEST          │
└─────────────────────────────────────────┘
                  │                        ╭S03
                  ▼
┌─────────────────────────────────────────┐
│             INPUT WEB PAGE                │
└─────────────────────────────────────────┘
                  │                        ╭S04
                  ▼
┌─────────────────────────────────────────┐
│       CONTROL WEB PAGE DISPLAY            │
└─────────────────────────────────────────┘
                  │                        ╭S05
                  ▼
┌─────────────────────────────────────────┐
│    INPUT SELECTION OPERATION SIGNAL       │
└─────────────────────────────────────────┘
                  │                        ╭S06
                  ▼
┌─────────────────────────────────────────┐
│   INPUT SELECTION OPERATION POSITION      │
└─────────────────────────────────────────┘
                  │                        ╭S07
                  ▼
┌─────────────────────────────────────────┐
│      OUTPUT TRANSMISSION REQUEST          │
└─────────────────────────────────────────┘
                  │                        ╭S08
                  ▼
┌─────────────────────────────────────────┐
│             INPUT WEB PAGE                │
└─────────────────────────────────────────┘
                  │                        ╭S09
                  ▼
┌─────────────────────────────────────────┐
│   SELECTED OBJECT DESIGNATION PROCESS     │
└─────────────────────────────────────────┘
                  │                        ╭S10
                  ▼
┌─────────────────────────────────────────┐
│  DISPLAY POSITION DETERMINATION PROCESS   │
└─────────────────────────────────────────┘
                  │                        ╭S11
                  ▼
┌─────────────────────────────────────────┐
│       CONTROL WEB PAGE DISPLAY            │
└─────────────────────────────────────────┘
                  │
                  ▼
┌─────────────────────────────────────────┐
│                  END                      │
└─────────────────────────────────────────┘
```

# FIG.4

```
                                                            ⌇100
  ┌──────────────────────────────────────────────────────────┐
  │        ⌇120                              ⌇121             │
  │  ┌──────────────────┐            ┌──────────────────┐      │
  │  │                  │            │                  │      │
 ┌┼─▶│   INPUT DEVICE   │──────────▶ │   OUTPUT PART    │      │
 ││  │                  │            │                  │      │
 ││  └──────────────────┘            └──────────────────┘      │
 ││           │                                                │
 ││           │         ⌇122                                   │
 ││           ▼                                                │
 ││  ┌──────────────────┐                                      │
 ││  │  SELECTED OBJECT │                                      │
 ││  │ DESIGNATING PART │                                      │
 ││  └──────────────────┘                                      │
 ││           │                                                │
 ││           │         ⌇123                                   │
 ││           ▼                                                │
 ││  ┌──────────────────┐                                      │
 ││  │ DISPLAY POSITION │                                      │
 ││  │ DETERMINING PART │                                      │
 ││  └──────────────────┘                                      │
 ││           │                                                │
 ││           │         ⌇124                                   │
 ││           ▼                                                │
 ││  ┌──────────────────┐                                      │
 ││  │     DISPLAY      │                                      │
 │└─▶│ CONTROLLING PART │                                      │
 │   └──────────────────┘                                      │
  └──────────────────────────────────────────────────────────┘
```

# FIG.5A

# FIG.5B

# FIG.6

WD1

PLEASE SELECT A PREFECTURE FOR WHI
WOULD LIKE TO SEE A WEATHER FORE

| GUNMA | TOCHIGI | |
| SAITAMA | | IBARAKI |
| | TOKYO | |
| KANAGAWA | | HIBA |

VSB

CR

HSB

LK2

# FIG.7

# FIG.8A

```
        ┌──────────────────────────────────────────┐
        │      DISPLAY CONTROL PROCESS START         │
        └──────────────────────────────────────────┘
                            │
                            ▼                   S21
        ┌──────────────────────────────────────────┐      ⎛   ⎞
        │         INPUT TRANSMISSION REQUEST         │      │ 1 │
        └──────────────────────────────────────────┘      ⎝   ⎠
                            │                   S22
                            ▼
        ┌──────────────────────────────────────────┐
        │        OUTPUT TRANSMISSION REQUEST         │
        └──────────────────────────────────────────┘
                            │                   S23
                            ▼                          ⎛   ⎞
        ┌──────────────────────────────────────────┐   │ 2 │
        │              INPUT WEB PAGE                │   ⎝   ⎠
        └──────────────────────────────────────────┘
                            │                   S24
                            ▼
        ┌──────────────────────────────────────────┐
        │         CONTROL WEB PAGE DISPLAY           │
        └──────────────────────────────────────────┘
                            │                   S25
                            ▼
        ┌──────────────────────────────────────────┐
        │       INPUT SELECTION OPERATION SIGNAL     │
        └──────────────────────────────────────────┘
                            │                   S26     ⎛   ⎞
                            ▼                           │ 3 │
        ┌──────────────────────────────────────────┐   ⎝   ⎠
        │      INPUT SELECTION OPERATION POSITION    │
        └──────────────────────────────────────────┘
                            │                   S27
                            ▼
        ┌──────────────────────────────────────────┐
        │        OUTPUT TRANSMISSION REQUEST         │
        └──────────────────────────────────────────┘
                            │                   S28     ⎛   ⎞
                            ▼                           │ 4 │
        ┌──────────────────────────────────────────┐   ⎝   ⎠
        │     OUTPUT SELECTION OPERATION POSITION    │
        └──────────────────────────────────────────┘
                            │                   S29
                            ▼                           ⎛   ⎞
        ┌──────────────────────────────────────────┐   │ 5 │
        │      INPUT WEB PAGE AND DISPLAY POSITION   │   ⎝   ⎠
        └──────────────────────────────────────────┘
                            │                   S30
                            ▼
        ┌──────────────────────────────────────────┐
        │         CONTROL WEB PAGE DISPLAY           │
        └──────────────────────────────────────────┘
                            │
                            ▼
        ┌──────────────────────────────────────────┐
        │                   END                      │
        └──────────────────────────────────────────┘
```

# FIG.8B

```
        ┌─────────────────────────────────────────────┐
        │    TRANSMISSION CONTROL PROCESS START       │
        └─────────────────────────────────────────────┘
                            │
                            ▼                      ⌐S41
        ┌─────────────────────────────────────────────┐
  (1)-->│         INPUT TRANSMISSION REQUEST          │
        └─────────────────────────────────────────────┘
                            │                      ⌐S42
                            ▼
        ┌─────────────────────────────────────────────┐
        │            READ OUT WEB PAGE                │
        └─────────────────────────────────────────────┘
                            │                      ⌐S43
                            ▼
        ┌─────────────────────────────────────────────┐
  (2)<--│            OUTPUT WEB PAGE                  │
        └─────────────────────────────────────────────┘
                            │                      ⌐S44
                            ▼
        ┌─────────────────────────────────────────────┐
        │         INPUT TRANSMISSION REQUEST          │
        └─────────────────────────────────────────────┘
                            │                      ⌐S45
                            ▼
        ┌─────────────────────────────────────────────┐
  (3)   │            READ OUT WEB PAGE                │
        └─────────────────────────────────────────────┘
                            │                      ⌐S46
                            ▼
        ┌─────────────────────────────────────────────┐
        │     SELECTED OBJECT DESIGNATION PROCESS     │
        └─────────────────────────────────────────────┘
                            │                      ⌐S47
                            ▼
        ┌─────────────────────────────────────────────┐
  (4)-->│      INPUT SELECTED OPERATION POSITION      │
        └─────────────────────────────────────────────┘
                            │                      ⌐S48
                            ▼
        ┌─────────────────────────────────────────────┐
        │    DISPLAY POSITION DETERMINATION PROCESS   │
        └─────────────────────────────────────────────┘
                            │                      ⌐S49
                            ▼
        ┌─────────────────────────────────────────────┐
  (5)<--│    OUTPUT WEB PAGE AND DISPLAY POSITION     │
        └─────────────────────────────────────────────┘
                            │
                            ▼
        ┌─────────────────────────────────────────────┐
        │                   END                       │
        └─────────────────────────────────────────────┘
```

# FIG.9

INPUT PART — 320

READOUT PART — 321

INFORMATION STORING PART — 329

SELECTED OBJECT DESIGNATING PART — 322

DISPLAY POSITION DETERMINING PART — 323

OUTPUT PART — 324

300

# FIG.10

# FIG.11

SELECTION FREQUENCY TABLE

| URL | OBJECT ID | SELECTION FREQUENCY | RANK |
|---|---|---|---|
| http://www.xxx.com | OID1 | 100 | 4 |
| | OID2 | 120 | 3 |
| | OID3 | 70 | 6 |
| | OID4 | 85 | 5 |
| http://www.yyy.com | OID5 | 25 | 8 |
| | OID6 | 234 | 1 |
| | OID7 | 145 | 2 |
| | OID8 | 34 | 7 |
| . . . | . . . | . . . | . . . |

# FIG.12

RATE-OF-INCREASE TABLE

| URL | OBJECT ID | SELECTION FREQUENCY FROM 14 DAYS PRIOR TO 8 DAYS PRIOR | SELECTION FREQUENCY FROM 7 DAYS PRIOR TO 1 DAY PRIOR | RATE OF INCREASE | SELECTION RANK |
|---|---|---|---|---|---|
| http://www.xxx.com | OID1 | 10 | 13 | 1.3 | 4 |
| | OID2 | 6 | 18 | 3 | 1 |
| | OID3 | 7 | 5 | 0.7 | 6 |
| | OID4 | 8 | 7 | 0.9 | 5 |
| http://www.yyy.com | OID5 | 2 | 3 | 1.5 | 7 |
| | OID6 | 23 | 20 | 0.9 | 2 |
| | OID7 | 14 | 15 | 1.1 | 3 |
| | OID8 | 3 | 2 | 0.7 | 8 |
| ... | ... | ... | ... | ... | ... |

EP 2 833 273 A1

# FIG.13

SELECTION FREQUENCY TABLE

| USER ID | URL | OBJECT ID | SELECTION FREQUENCY | SELECTION RANK |
|---------|-----|-----------|---------------------|----------------|
| U001 | http://www.xxx.com | OID1 | 100 | 4 |
| | | OID2 | 120 | 3 |
| | | OID3 | 70 | 6 |
| | | OID4 | 85 | 5 |
| | http://www.yyy.com | OID5 | 25 | 8 |
| | | OID6 | 234 | 1 |
| | | OID7 | 145 | 2 |
| | | OID8 | 34 | 7 |
| U002 | http://www.xxx.com | OID1 | 100 | 4 |
| | | OID2 | 120 | 3 |
| | | OID3 | 70 | 6 |
| | | OID4 | 85 | 5 |
| ... | ... | ... | ... | ... |

# FIG.14

```
        ( DISPLAY CONTROL PROCESS START )
                        │
                        ▼                          S51
        ┌──────────────────────────────────────┐
        │      INPUT USER ID AND PASSWORD       │
        └──────────────────────────────────────┘
                        │                          S52
                        ▼
        ┌──────────────────────────────────────┐
        │     OUTPUT USER ID AND PASSWORD       │
        └──────────────────────────────────────┘
                        │                          S53
                        ▼
        ┌──────────────────────────────────────┐
        │       INPUT AUTHENTICATION RESULT     │
        └──────────────────────────────────────┘
                        │                          S54
                        ▼                              No
        <          AUTHENTICATION CLEARED?          >───┐
                        │ Yes                      S55    │
                        ▼                                 │
        ┌──────────────────────────────────────┐         │
        │        INPUT TRANSMISSION REQUEST     │         │
        └──────────────────────────────────────┘         │
                        │                          S56    │
                        ▼                                 │
        ┌──────────────────────────────────────┐         │
        │       OUTPUT TRANSMISSION REQUEST     │         │
        └──────────────────────────────────────┘         │
                        │                          S57    │
                        ▼                                 │
        ┌──────────────────────────────────────┐         │
        │             INPUT WEB PAGE            │         │
        └──────────────────────────────────────┘         │
                        │                          S58    │
                        ▼                                 │
        ┌──────────────────────────────────────┐         │
        │        CONTROL WEB PAGE DISPLAY       │         │
        └──────────────────────────────────────┘         │
                        │                          S59    │
                        ▼                                 │
        ┌──────────────────────────────────────┐         │
        │     INPUT SELECTION OPERATION SIGNAL  │         │
        └──────────────────────────────────────┘         │
                        │                          S60    │
                        ▼                                 │
        ┌──────────────────────────────────────┐         │
        │    INPUT SELECTION OPERATION POSITION │         │
        └──────────────────────────────────────┘         │
                        │                          S61    │
                        ▼                                 │
        ┌──────────────────────────────────────┐         │
        │       OUTPUT TRANSMISSION REQUEST     │         │
        └──────────────────────────────────────┘         │
                        │                          S62    │
                        ▼                                 │
        ┌──────────────────────────────────────┐         │
        │             INPUT WEB PAGE            │         │
        └──────────────────────────────────────┘         │
                        │                          S63    │
                        ▼                                 │
        ┌──────────────────────────────────────┐         │
        │    SELECTED OBJECT DESIGNATION PROCESS│         │
        └──────────────────────────────────────┘         │
                        │                          S64    │
                        ▼                                 │
        ┌──────────────────────────────────────┐         │
        │  DISPLAY POSITION DETERMINATION PROCESS│        │
        └──────────────────────────────────────┘         │
                        │                          S65    │
                        ▼                                 │
        ┌──────────────────────────────────────┐         │
        │        CONTROL WEB PAGE DISPLAY       │         │
        └──────────────────────────────────────┘         │
                        │                                 │
                        ▼◄────────────────────────────────┘
                    (   END   )
```

# FIG.15A

DISPLAY CONTROL
PROCESS START

INPUT USER ID AND PASSWORD — S71  (11)

OUTPUT USER ID AND PASSWORD — S72

INPUT AUTHENTICATION RESULT — S73  (12)

AUTHENTICATION CLEARED? — S74

No

Yes

INPUT TRANSMISSION REQUEST — S75  (13)

OUTPUT TRANSMISSION REQUEST — S76

INPUT WEB PAGE — S77  (14)

CONTROL WEB PAGE DISPLAY — S78

INPUT SELECTION OPERATION SIGNAL — S79  (15)

INPUT SELECTION OPERATION POSITION — S80

OUTPUT TRANSMISSION REQUEST — S81  (16)

OUTPUT SELECTION OPERATION POSITION — S82

INPUT WEB PAGE — S83  (17)

CONTROL WEB PAGE DISPLAY — S84

END

EP 2 833 273 A1

# FIG.15B

TRANSMISSION CONTROL PROCESS START

INPUT USER ID AND PASSWORD ⟋S91

AUTHENTICATE USER ⟋S92

OUTPUT AUTHENTICATION RESULT ⟋S93

AUTHENTICATION CLEARED? ⟋S94   No

Yes ⟋S95

INPUT TRANSMISSION REQUEST

READ OUT WEB PAGE ⟋S96

OUTPUT WEB PAGE ⟋S97

INPUT REQUEST ⟋S98

READ OUT WEB PAGE ⟋S99

SELECTED OBJECT DESIGNATION PROCESS ⟋S100

INPUT SELECTION OPERATION POSITION ⟋S101

DISPLAY POSITION DETERMINATION PROCESS ⟋S102

OUTPUT WEB PAGE ⟋S103

END

11 12 13 14 15 16 17

43

# FIG.16

RATE-OF-INCREASE TABLE

| USER ID | URL | OBJECT ID | SELECTION FREQUENCY FROM 14 DAYS PRIOR TO 8 DAYS PRIOR | SELECTION FREQUENCY FROM 7 DAYS PRIOR TO 1 DAY PRIOR | RATE OF INCREASE | SELECTION RANK |
|---|---|---|---|---|---|---|
| U001 | http://www.xxx.com | OID1 | 10 | 13 | 1.3 | 4 |
| | | OID2 | 6 | 18 | 3 | 1 |
| | | OID3 | 7 | 5 | 0.7 | 6 |
| | | OID4 | 8 | 7 | 0.9 | 5 |
| | http://www.yyy.com | OID5 | 2 | 3 | 1.5 | 7 |
| | | OID6 | 23 | 20 | 0.9 | 2 |
| | | OID7 | 14 | 15 | 1.1 | 3 |
| | | OID8 | 3 | 2 | 0.7 | 8 |
| U002 | http://www.xxx.com | OID1 | 10 | 14 | 1.4 | 4 |
| | | OID2 | 6 | 24 | 4 | 1 |
| | | OID3 | 7 | 5 | 0.7 | 6 |
| | | OID4 | 8 | 7 | 0.9 | 5 |
| ... | ... | ... | ... | ... | ... | ... |

EP 2 833 273 A1

# FIG.17

ATTRIBUTE TABLE

| USER ID | ADDRESS |
|---------|---------|
| U001 | ⋯NIHONBASHI, CHUO WARD, TOKYO |
| U002 | ⋯MINATO WARD, KANAGAWA PREFECTURE |
| U003 | ⋯TOGANE, CHIBA PREFECTURE |
| ⋯ | ⋯ |

# FIG.18

DISPLAY CONTROL PROCESS START

S111
INPUT TRANSMISSION REQUEST

S112
OUTPUT TRANSMISSION REQUEST

S113
RECEIVED WEB PAGE

S114
CONTROL WEB PAGE DISPLAY

S115
INPUT SELECTION OPERATION SIGNALS

S116
INPUT SELECTION OPERATION POSITION

S117
OUTPUT TRANSMISSION REQUEST

S118
INPUT WEB PAGE

S119
SELECTED OBJECT DESIGNATION PROCESS

S120
INPUT CURSOR POSITION

S121
CALCULATE MOVEMENT DISTANCE
BETWEEN SELECTION OPERATION POSITION AND CURSOR POSITION

S122
MOVEMENT DISTANCE ≤ Th? — No

Yes

S123
DISPLAY POSITION DETERMINATION PROCESS
BASED ON CURSOR POSITION

S124
DISPLAY POSITION DETERMINATION PROCESS
BASED ON OPERATION POSITION

S125
CONTROL WEB PAGE DISPLAY

END

# FIG.19A

EP 2 833 273 A1

# FIG.19B

WD1   WD2

Ow → Xw
Yw

O1

X1  PLEASE SELECT A REGION FOR WHICH YOU
WOULD LIKE TO SEE A WEATHER FORECAST
Y1

O2

PLEASE SELECT A PREFECTURE
FOR WHICH YOU WOULD LIKE TO
SEE A WEATHER FORECAST

| GUNMA | TOCHIGI | IBARAKI |
| SAITAMA | | |

| CHUGOKU | KINKI |

TOKYO    CHIBA

KANAGAWA

KYUSHU

SHIKOKU

LK2

CR

| START | WEATHER FORECAST-REGION | WEATHER FORECAST-PREFECTURE SELECTION | | 23:15 |

EP 2 833 273 A1

# FIG.20A

PLEASE SELECT A REGION FOR WHICH YOU WOULD LIKE TO SEE A
WEATHER FORECAST

HOKKAIDO

TOHOKU

CHUBU

KANTO — LK1

CHUGOKU

KINKI

KYUSHU

SHIKOKU

CR

# FIG.20B

PLEASE SELECT A REGION FOR WHICH YOU WOULD LIKE TO SEE A
WEATHER FORECAST

GUNMA    TOCHIGI

IBARAKI

SAITAMA

TOKYO

CHIBA

KANAGAWA

CR

LK2

## INTERNATIONAL SEARCH REPORT

International application No.

PCT/JP2013/057021

A. CLASSIFICATION OF SUBJECT MATTER
*G06F3/048*(2013.01)i, *G09G5/00*(2006.01)i, *G09G5/38*(2006.01)i

According to International Patent Classification (IPC) or to both national classification and IPC

B. FIELDS SEARCHED

Minimum documentation searched (classification system followed by classification symbols)
G06F3/048, G09G5/00, G09G5/38

Documentation searched other than minimum documentation to the extent that such documents are included in the fields searched
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-140497 A (Kyocera Corp.),<br>24 June 2010 (24.06.2010),<br>entire text; all drawings<br>(Family: none) | 1-12 |
| A | JP 6-214546 A (Canon Inc.),<br>05 August 1994 (05.08.1994),<br>entire text; all drawings<br>(Family: none) | 1-12 |
| A | JP 2008-167391 A (Sharp Corp.),<br>17 July 2008 (17.07.2008),<br>entire text; all drawings<br>(Family: none) | 1-12 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>07 June, 2013 (07.06.13) | Date of mailing of the international search report<br>18 June, 2013 (18.06.13) |
|---|---|
| Name and mailing address of the ISA/<br>Japanese Patent Office | Authorized officer |
| Facsimile No. | Telephone No. |

Form PCT/ISA/210 (second sheet) (July 2009)

**EP 2 833 273 A1**

### Patent documents cited in the description

- JP 2011108102 A

- JP 2012081301 A